# EUROPEAN PATENT APPLICATION

(11) **EP 4 664 090 A2**
(43) Date of publication of application: **17.12.2025**
(21) Application number: 25212736.0
(22) Date of filing: 11.01.2023
(51) Int. Cl.: G01M 17/02

(54) **AUTO-LOCATION OF TIRE MONITORS**

(30) Priority: 24.06.2022 US 202263355459 P
(62) Divisional of application: 23827648.9
(71) Applicant: Sensata Technologies, Inc., Attleboro, MA 02703 (US)
(72) Inventor: The designation of the inventor has not yet been filed
(74) Representative: Flügel Preissner Schober Seidel

(57) **Abstract**

The present invention refers to a tire monitor configured for coupling to a tire of a vehicle in at least a first orientation or a second orientation, the tire monitor comprising:
an accelerometer configured to generate acceleration data;
a sensor configured to generate sensor data associated with an area of contact of the tire with a road surface; and
a computing system configured to perform operations comprising:
determining, based at least in part on the acceleration data, that the tire monitor is mounted in an orientation comprising the first orientation or the second orientation;
determining, based at least in part on the orientation and the sensor data, that the tire is coupled to a front axle of the vehicle or that the tire is coupled to a rear axle of the vehicle; and

determining, based at least in part on the orientation and the sensor data, that the tire is coupled to a left side of the vehicle or that the tire is coupled to a right side of the vehicle. The present invention further refers to a method for auto locating a tire monitor on a vehicle and a system comprising a vehicle, tires associated with the vehicle and the tire monitor associated with one of the tires.

## Description

### CROSS-REFERENCE TO RELATED APPLICATIONS

This application claims the benefit of priority of US Provisional Patent Application no. 63/355,459, titled "Auto-Location of Tire Monitors," filed June 24, 2022, the entirety of which is hereby incorporated by reference.

### FIELD OF THE TECHNOLOGY

The subject disclosure relates to tire pressure monitoring systems, and more particularly to auto location of tire pressure sensors.

### BACKGROUND OF TECHNOLOGY

Auto location of tire sensors is important for proper vehicle safety and/or functionality. For instance, a tire pressure monitoring system (TPMS) can monitor tire inflation levels, among other sensed information, in all tires of a vehicle and provide this information to a user. In some conventional systems, a sensor and/or transmitter can be mounted on each of the tires to periodically transmit signals from the sensor(s) that convey information to a receiver and/or a computing system which is usually mounted on the vehicle. The computing system may additionally be integrated with and/or connected to a display on the vehicle which may alert the user to information relating to the tires.

Conventionally, different automobile manufacturers have implemented different tire sensor location techniques. For instance, the TPMS may perform a learning routine, enabling the TPMS to determine a location of the tires from signals received from the respective sensor(s). As such, the TPMS may determine whether the signal received was transmitted from a tire on a particular side (e.g., the left or the right) of the vehicle and a particular axle (e.g., the front or the rear) of the vehicle. Some vehicles require a manual learning routine that must be conducted at the manufacturing facility (e.g., before deployment of the vehicle) to establish this correspondence between sensor and location on the vehicle. Additionally, this manual learning routine must be conducted by the user (e.g., an owner, operator, mechanic, etc.) any time the tires are rotated and/or replaced.

An additional, conventional location technique involves sensors/transmitters transmitting unique identification codes to the TPMS. For example, the sensors/transmitters may use unique identification codes that, when received by the TPMS, enable the TPMS to identify the transmitting tire by association. However, similarly to the conventional method above, any time the tires are rotated and/or replaced, the TPMS must be re-programmed to ensure the correct association.

### BRIEF DESCRIPTION OF THE DRAWINGS

So that those having ordinary skill in the art to which the disclosed systems and techniques pertain will more readily understand how to make and use the same, reference may be had to the following drawings.
FIG. 1 is a schematic representation of a vehicle including tire pressure monitors and a tire pressure monitoring system, in accordance with aspects of this disclosure.
FIG. 2 is a flowchart illustrating an example process for auto locating tire monitors in stationary vehicles, in accordance with aspects of this disclosure.
FIG. 3 is a schematic representation of a vehicle system illustrating auto locating tire pressure sensor locations using time-of-flight and/or angle of arrival and/or distance measurement principles in stationary vehicles, in accordance with aspects of this disclosure.
FIG. 4 is an example schematic representation of a tire monitoring system architecture, in accordance with aspects of this disclosure.
FIG. 5 is a flowchart illustrating an example process for determining tire monitor installation orientation, in accordance with aspects of this disclosure.
FIG. 6 is a graphical representation of a representation of a relationship between acceleration and contact patch characteristics in moving vehicles, in accordance with aspects of this disclosure.
FIG. 7 is a graphical representation of a relationship between a force measured by the sensor between a right-hand turn and a left-hand turn, in accordance with aspects of this disclosure.
FIG. 8 is an illustrative representation of a relationship between turning and contact patch characteristics in moving vehicles, in accordance with aspects of this disclosure.
FIG. 9 is a flowchart illustrating an example process for auto locating tire monitors on a vehicle, in accordance with aspects of this disclosure.
FIG. 10 is flowchart illustrating a process for determining whether to perform auto location of tire monitors, according to aspects of this disclosure.

### DETAILED DESCRIPTION

The subject technology overcomes prior art problems associated with tire pressure monitors. For example, systems and techniques described herein provide improved auto-location of tire monitors on a vehicle. For example, the techniques described herein provide for auto location of tire monitors while the vehicle is in motion and/or while the vehicle is stationary. The advantages, and other features of the systems and methods disclosed herein, will become more readily apparent to those having ordinary skill in the art from the following detailed description of certain preferred embodiments taken in conjunction with the drawings which set forth representative examples of the present disclosure.

In some aspects of this disclosure, a tire monitor is coupled to a tire of an automobile. For instance, a vehicle having four tires may have four tire monitors, one associated with each of the tires. As is generally understood, conventional tire monitors may include a pressure sensor, and, in at least some instances a motion sensor, a temperature sensor, and/or one or more other sensors for determining attributes of a respective tire. The sensor(s) generate sensor data that can be transmitted to one or more computing systems and/or to an interface associated with the vehicle, e.g., to provide a driver, a technician, a vehicle owner, or the like, with information about conditions associated with the tires. In a simple example, the tire monitors can determine a tire pressure and transmit the tire pressure to a dashboard display for presentation to an occupant of the vehicle.

Aspects of this disclosure may be particularly directed to determining a location of a tire monitor on the vehicle. For instance, techniques described herein can determine whether a tire monitor is associated with a front, left tire, a rear, right tire, or the like. In some aspects of this disclosure, the location of a tire can be determined at the tire, e.g., independently of information from other monitors and/or independently of a centralized, e.g., vehicle, computing system. In other examples, a centralized computing system, e.g., a tire pressure monitoring system can perform auto-location techniques.

As a result of the improved auto-location systems and techniques disclosed herein, a driver can receive accurate tire-related data, regardless of whether the tires were recently rotated, mounted, and/or the like. In at least some examples, the tire monitors can be auto-located without requiring access to a centralized computing system and/or vehicle network, such as a CAN BUS, or the like. Moreover, techniques described herein that allow for auto-location of tire monitors without the need for vehicle movement can provide critical tire information prior to movement of the vehicle. For instance, a driver may be alerted to a flat or otherwise unsafe tire condition prior to operating the vehicle. These and other features and benefits of this disclosure will be discussed with reference to the Figures.

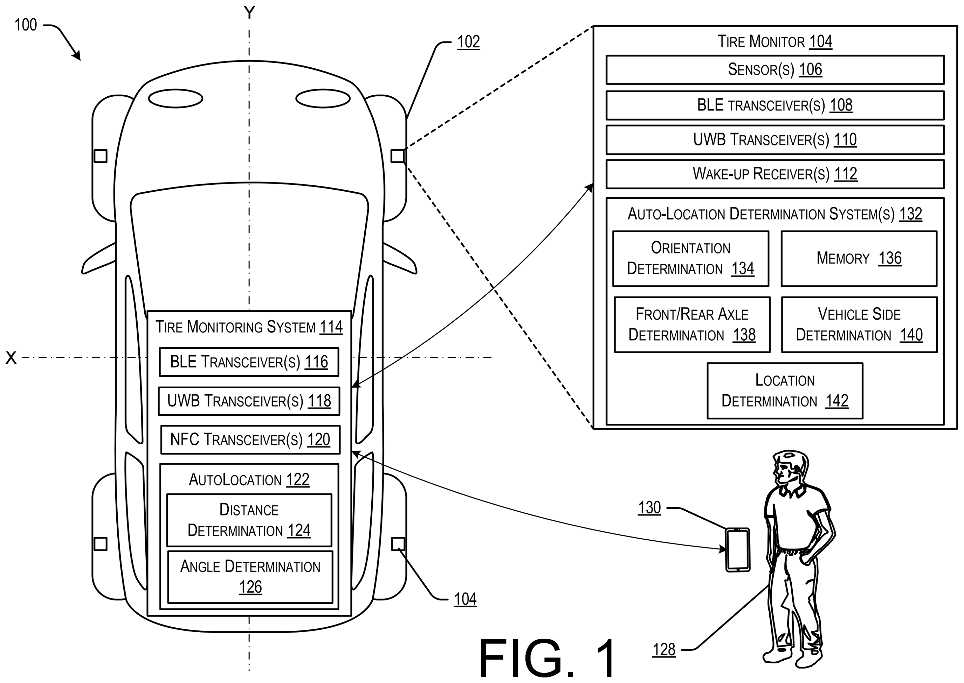

FIG. 1 illustrates a vehicle 100 including a number of tires 102 (four in the example). Each of the tires 102 has associated therewith a tire monitor 104. Specifically, each one of the tire monitors 104 is coupled to each one of the tires 102. As detailed herein, aspects of this disclosure may be particularly directed to determining which of the tires 102 each of the monitors 104 is coupled to. For example, systems and techniques described herein can include determining whether one of the tire monitors is associated with the driver's side front tire, the driver's side rear tire, the passenger side front tire, or the passenger side rear tire.

According to some aspects of this disclosure, an association of each of the monitors 104 with a tire is based on automatic location principles, e.g., based on data and signals sent between the tire monitors 104 and a centralized system in communication with the tire monitors 104. As illustrated in FIG. 1, each of the tire monitors 104 can include, among other features, one or more sensor(s) 106, one or more Bluetooth Low Energy (BLE) transceiver(s) 108, one or more ultra-wide band (UWB) transceivers 110, and one or more wake-up receivers 112. Although not illustrated in FIG. 1, each of the tire monitors 104 may also include one or more power sources, e.g., batteries, and/or other conventionally-known components. The BLE transceiver(s) 108, UWB transceiver(s) 110, and/or the wake-up receivers 112 are provided for illustration only. As will be appreciated from the written description, aspects of this disclosure may be implemented using other and/or additional components. For example, and without limitation, transmission technologies other than BLE and/or UWB may be used to perform some of the techniques described herein.

The sensor(s) 106 are configured to generate signals associated with one or more measured attributes of the tires 102. For example, the sensor(s) 106 can include a pressure sensor configured to generate pressure data associated with the associated tires. In another example, the sensor(s) 106 can include a temperature sensor configured to generate temperature data associated with the tire. The sensor(s) 106 can also, or alternatively, include motion sensors. For example, motion sensor(s) can include one or more of accelerometers, e.g., 3-axis accelerometers, gyroscopes, inertial measurement units, resolvers, rotary sensors, position sensors, or the like. In some further examples, the sensor(s) 106 can also or alternatively include force sensors, lateral force sensors, and/or other sensors or sensor combinations that can be used to determine a contact patch associated with the tire. The sensor(s) 106 may generate updated data at a predetermined frequency, e.g., according to a sampling rate. The sensor(s) 106 may be configurable, e.g., the sampling rate may be adjustable. For example, the sensor(s) 106 may generate data at a first sampling rate when the vehicle is in motion and at a second sampling rate when the vehicle is stationary.

The BLE transceiver(s) 108 (which may also be referred to herein as first BLE transceiver(s) 108 and/or tire monitor BLE transceiver(s)) are configured to generate, receive and/or transmit signals using conventional BLE standards and/or the like. For example, the BLE transceiver(s) 108 may be configured to generate and/or transmit signals associated with sensor data generated by the sensor(s) 106. In some examples, the BLE transceiver(s) 108 can include functionality to modulate a signal corresponding to data from the sensor(s) 106. Any output signals from the first BLE transceiver(s) 108 may be associated with a first protocol, e.g., including a first radio frequency output. Moreover, and as noted above, the techniques described herein are not limited to using BLE technologies.

The first BLE transceiver(s) 108 may be configured to generate output signals. The output signals may be radio frequency (RF) signals carrying information associated with data generated by the sensor(s) 106. For example, the output signals associated with the first BLE transceiver(s) 108 carry information generated by the sensor(s) 106, e.g., tire pressure data, and may conform to a first protocol. The first BLE transceiver(s) 108 may also be configured to receive signals, e.g., command or request signals. In examples described herein, the first BLE transceiver(s) 108 can receive requests to transmit sensor data. As also detailed herein, some example techniques can auto-locate the tire monitor(s) 104 using angle of arrival and/or high accuracy distance measurement channel sounding (HADM/CS) for signals received at and/or sent from the first BLE transceiver(s) 108. Without limitation, the BLE transceiver(s) 108 can send and/or receive data according to varying protocols, e.g., which may have one or more of a predetermined frequency or bandwidth, e.g., a transmission frequency, a transmission channel, a data rate, a transmission power, or other characteristics of a wireless transmission. In at least some examples, the first protocol and/or the second protocol may correspond to Bluetooth^{®} standards or the like. Although the first BLE transceiver(s) 108 are shown as a single item in FIG. 1, in other examples, the first BLE transceiver(s) 108 can be embodied as one or more transmitters and/or one or more receivers, and the transmitter(s) and/or the receiver(s) may have one or more associated antennas, processing logic, and/or the like

The first UWB transceiver(s) 110 are configured to receive, generate, and/or transmit signals using UWB technologies and/or protocols. For example, the first UWB transceiver(s) 110 can perform some or all of the same functions as the first BLE transceiver(s) 108, including transmitting sensor data, but using UWB radio technology instead of BLE radio technology. For example, UWB may be a low power wireless communication technology that uses short pulse radio waves to achieve high bandwidth connections. In aspects of this disclosure, UWB transmissions may be used to determine locations of tire monitors with a higher positioning accuracy, e.g., relative to BLE.

As illustrated schematically, the vehicle 100 also includes a Tire Monitoring System 114 that has associated therewith one or more second BLE transceiver(s) 116, one or more second UWB transceiver(s) 118, one or more near-field communication (NFC) transceiver(s) 120, and an auto-location system 122.

The tire monitoring system 114 may be embodied as a computing system onboard the vehicle 100. The tire monitoring system 114 includes functionality to communicate with each of the tire monitor(s) 104, e.g., to receive information about the tires 102 at a centralized (computing-wise) location. Generally, the tire monitoring system 114 can receive signals from the tire monitor(s) 104, discern information about the tires 102 from the received signal(s), and/or cause display of information about the tires 102 to a user, technician, or the like. In examples, the tire monitoring system 114 includes logic to receive information from the tire monitors 104, process and/or output such information, and/or determine whether any of the associated tires 102 has an anomalous condition. Without limitation, the tire monitoring system 114 can include functionality to determine whether a tire pressure of any of the tires 102 is outside of a certain predefined operating limit. For instance, the tire monitoring system 114 can determine a pressure for each of the tires 102 based on the signals received from the tire monitors 104, and identify that the pressure of the tire is lower than a first threshold pressure (e.g., the tire is underinflated) or higher than a second threshold pressure (e.g., the tire is overinflated). The tire monitoring system 114 can also include logic to transmit tire information, e.g., tire pressure, a determined alarm state, and/or the like, for presentation on an operator interface (not shown in FIG. 1) in the vehicle 100. Without limitation, the tire monitoring system 114 can transmit data for presentation via a wired or wireless communication connection.

The tire monitoring system 114 can be configured to communicate with the tire monitor(s) 104 via the second BLE transceiver(s) 116 and/or the second UWB transceiver(s) 118. Without limitation, the second BLE transceiver(s) 116 can be configured to communicate with the first BLE transceiver(s) 108 associated with each of the tire monitor(s) 104, and/or the second UWB transceiver(s) 118 can be configured to communicate with the first UWB transceiver(s) 110 associate with each of the tire monitor(s) 104. Although illustrated as transceiver(s), it will be appreciated that the second BLE transceiver(s) 116 and/or the second UWB transceiver(s) 118 may be embodied as one or more transmitters, one or more receivers, and/or one or more antennas.

In aspects of this disclosure, the tire monitoring system 114 can also include functionality to determine associations of individual of the tire monitors 104 with individual of the tires 102 using transmissions associated with the second BLE transceiver(s) 116 and/or the second UWB transceiver(s) 118. Specifically, the tire monitoring system 114 also is illustrated as including the auto-location component 122 that includes functionality to determine a position or location of the tire monitor(s) 104 on the vehicle 100 and, based at least in part on the position or location, determine an association of the tire monitor 104 with a specific tire 102. Although illustrated in FIG. 1 for ease of reference and understanding, various parts of the illustrated blocks and/or other aspects of the tire monitoring system 114 may be implemented in an intelligent hardware device, e.g., a central processing unit (CPU), a microcontroller, an application specific integrated circuit (ASIC), or may be implemented as part of a reconfigurable device. Aspects of the tire monitoring system 114 can include random access memory (RAM) and read-only memory (ROM) which may include instructions that are configured to, when executed (or when compiled and executed), cause aspects of the tire monitoring system 114 to perform various functions described and discussed further below. Various components of the tire monitoring system 114 may be implemented using one or more separate CPUs or ASICs, for example, and the components may, individually or collectively, be implemented with one or more ASICs adapted to perform some or all of the applicable functions in hardware. Each of the noted components may be a means for performing one or more functions related to operation of the system.

In more detail, the auto-location component 122 can include a distance determination component 124 and/or an angle determination component 126. For example, the auto-location component 122 may, via the distance determination component 124, estimate a distance or proximity of individual of the tire monitors 104 to the tire monitoring system 114, and, based at least in part on the distance/proximity, determine a location of the tire monitor 104 on the vehicle 100. For instance, and as detailed further herein, the auto-location component 122 may determine positions of the tire monitors 104 without any movement of the vehicle 100, e.g., on demand.

In more detail, the distance determination component 124 generally includes functionality to determine a distance of a remote antenna from an anchor position (e.g., an anchor transceiver or antenna associated therewith) using radio energy and the time of travel and/or phase delay of radio waves. Without limitation, the distance determination component 124 can determine a time of travel of radio waves travelling between the UWB transceiver(s) 118 at the tire monitoring system 114 and the first UWB transceiver(s) 110 at the tire monitor(s) 104 and determine a physical distance based on the time of travel. For instance, the distance determination component 124, using a time of travel of radio energy between the UWB transceiver(s) 118 associated with the tire monitoring system, e.g., the "anchor" UWB transceiver(s), and the first UWB transceiver(s) 110 associated with the tire monitors 104 may determine a distance of any of the UWB transceiver(s) location(s) to within +/-0.1 m, and track the location of those UWB transceiver(s). By strategically positioning the anchor UWB transceiver(s), e.g., the UWB transceiver(s) 118 associated with the tire monitoring system 114, on the vehicle 100, the distance to each of the tire monitors 104 from the tire monitoring system 114 is sufficiently different to be discernable by the distance determination component, thereby allow for appropriate location of each of the tire monitors 104 on the vehicle 100. Stated differently, by placing the UWB transceiver(s) and/or antennas associated therewith at offset position(s), the location of the tire monitor(s) 104 may be determined by their distance from the UWB transceiver(s), e.g., via the distance determination component 124. Although in the example just described the distance determination component 124 may use the time of travel between UWB transceiver(s), in other examples the distance determination component 124 can determine a phase delay of radio waves travelling between the BLE transceiver(s) 116 and the BLE transceiver(s) 108, although BLE technologies may be less accurate than UWB technologies.

In addition to, or instead of, using the distance(s) determined by the distance determination component, the auto-location component 122 can also determine an angle of arrival of UWB and/or BLE transmissions, e.g., via the angle determination component 126. Without limitation, and as detailed further below, the angle determination component 126 can determine the angle of arrival of radio signals received at the second UWB transceiver(s) 118 from the first UWB transceiver(s) 110 associated with the tire monitor(s) 104. For example, when an orientation of the tire monitoring system 114 (or of the UWB transceiver(s) 118, BLE transceiver(s) 116, and/or the like) is known, a quadrant of the vehicle, e.g., front-left, front-right, rear-right, rear-left, may be determined from the angle of arrival of a transmission from a tire monitor 104 and/or relative to an angle of arrival of transmission from other of the tire monitors 104.

In some examples, the tire monitoring system 114 may, via the second BLE transceiver(s) 116, transmit a signal to the tire monitors 104 that causes the tire monitors to turn on their respective UWB transceiver(s) 110, e.g., to perform auto-location using the auto-location component 122. In some examples, the first BLE transceiver(s) 108 at the tire monitors 104 can be configured to wake periodically to check for signals, e.g., to check for instructions to perform auto-location as described herein. As such, the vehicle 100 (using the tire monitoring system 114) could broadcast a BLE signal, via the second BLE transceiver 116 to the monitor(s) 104, commanding the monitor(s) 104 to turn on their UWB transceiver(s) 110.

The periodic waking of the BLE transceiver(s) at the tire monitor(s) 104 may consume a relatively large amount of energy. To reduce this power consumption, some implementations of this disclosure can include reducing the frequency at which the BLE transceiver(s) wake up to check for instructions. However, reducing the wake up frequency will correspondingly increase latency in the tire monitoring system 114, causing delays in locating the tire monitor(s) 104. To reduce this latency and/or to reduce power consumption, in some instances, the tire monitor(s) 104 may have the associated Wake-Up Receiver (WuRx) 112. The WuRx 112 may be configured to periodically wake to listen for commands from the vehicle 100. For example, the first BLE transceiver(s) 108 may be placed in a reduced power, e.g., sleep, mode while the WuRx 112 listens for these wake-up commands. Because the WuRx consumes considerably less power than the BLE transceiver(s) 108, the frequency at which requests to auto-locate the tire monitor(s) 104 are listened for may be increased, thereby decreasing latency associated with the system. Moreover, the WuRx 112 may enable the vehicle 100 to request auto-location of the tire monitor(s) 104 and/or the sensor(s) 106 while reducing power consumption. As noted above, the energy consumption requirements of a typical BLE transceiver is often too excessive to leave the transceiver always active to listen for commands from the vehicle 100 and/or to wake the transceiver at a sufficient frequency to perform on-demand or near on demand tire monitor location.

As just described, the auto-location component 122 can perform auto-location of the tire monitor(s) 104 in real time or near real time and regardless of whether the vehicle 100 is moving or stationary. In at least some examples, the auto-location component 122 can perform auto-location in response to one or more triggering events. For instance, proximity of a user 128 to the vehicle 100 may be a trigger for performing auto-location as described herein, e.g., such that the user is alerted to any tire pressure anomalies prior to beginning travel. In an example scenario illustrated in FIG. 1, the user 128 may approach the vehicle 100 while carrying an electronic device 130. The electronic device 130 is illustrated as a mobile phone, although other electronic devices, e.g., personal electronic devices, including but not limited to tablets, key fobs, computers, or the like, associated with the user 128 may be used. In implementations, the electronic device 130 can be any computing device capable of sending and/or receiving signals. In the example, the user 128 may be an owner of the vehicle 100, a lessee, a technician, a fleet manager, or any other individual associated with the vehicle 100. As will be appreciated, the electronic device 130 and the user 128 are shown for example only.

In the illustrated example of FIG. 1, the user 128 approaches the vehicle 100, and the electronic device 130 may advertise its presence by emitting a signal, e.g., over Bluetooth Low Energy (BLE). The vehicle 100 may then use the auto-location component 122, e.g., including the distance determination component 124, to estimate a distance associated with the electronic device 130. The distance determination component, via the second BLE transceiver(s) 116 and BLE transceiver(s) on the electronic device 130, may estimate the proximity of the electronic device. For example, the distance determination component can use BLE-spectrum energy to determine a distance of the device 130 to within a distance, for example, of about 1.5 meters. In some instances, when the vehicle 100 detects that the electronic device 130 is closer than the example 1.5 m, it may turn on the second UWB transceiver(s) 118 and send a BLE command, via the second BLE transceiver(s) 116, to initiate auto location of the tire monitors 104, as discussed above. As will be appreciated, the distances provided herein are for example only. The methods and/or techniques may influence the range and/or accuracy of distances determined by the distance determine component 124.

The auto-location component 122 may also send a signal to the electronic device 130 to turn on any UWB transmitter(s) (not shown) associated with the electronic device 130. In this way, the UWB transceiver(s) 118 on the vehicle 100 may also communicate with any UWB transmitter(s) associated with the electronic device 130, and the distance determination component 124 may determine a distance to the device 130 to within about 0.1 m of the vehicle 100 and/or track the location of the electronic device 130. For example, the anchors on the vehicle 100 are in a fixed position on the vehicle 100 relative to the electronic device 130 which may allow the anchors, via the distance determination component 124, to determine the location of the electronic device 130 as discussed and alluded to above and herein. In some examples, information about the tires, e.g., as measured by the sensors 106, can also be transmitted to the electronic device 130, e.g., for display to the user.

Although an example of the tire monitoring system 114 communicating with the electronic device 130 has just been described, other means of communication are contemplated. For instance, communication with the electronic device 130, as described and alluded to herein, may be conducted via Near-Field Communication (NFC) transceiver(s) 120.

Other triggering events, e.g., to initiate auto-location of the tire monitor(s) 104 also are contemplated. For instance, and without limitation, sensors on the vehicle 100 may indicate proximity of a user that causes the tire monitoring system to undertake auto-location and other monitoring functions as detailed herein. Without limitation, the tire monitoring system may wake up the tire monitor(s) 104 for auto-location and monitoring purposed in response to a door being opened, the user 128 entering or being detected in the vehicle 100, a key being placed in an ignition, and/or the like.

As will be appreciated from the foregoing, some examples of this disclosure use communication between, and positioning of, the tire monitoring system 114 and the tire monitor(s) 104 to determine locations of the tire monitor(s) 104 on the vehicle 100. By associating the tire monitor(s) 104 with a specific tire location, tire pressure and/or the like, e.g., tire pressure anomalies, as determined by the individual tire monitor(s) 104 can be readily associated with a tire and reported to the user, even before a trip begins.

In other examples of this disclosure, the tire monitor(s) 104 may include functionality to perform auto-location, e.g., independent of the tire monitoring system 114. For instance, as illustrated in FIG. 1, the tire monitor(s) 104 also are illustrated as including an auto-location determination system 132. The auto-location determination system 132 may operate and/or determine the location of the respective tire monitors associated with each tire 102 of the plurality of tires separately from the tire monitoring system 114. For example, determination of the location of the tire monitor 104 may include providing sensor data to the auto-location determination system 132. In such instances, the sensor(s) 106 may include an accelerometer. The accelerometer used by the sensor(s) may be three-axis accelerometers.

As illustrated in FIG. 1, the auto-location determination system 132 may include an orientation determination component 134, memory 136, a front/rear axle determination component 138, a vehicle side determination component 140, and a location determination component 142. As detailed further herein, the various components of the auto-location determination system 132 may determine individual attributes of the sensor, which, together, allow for a determination of a position of the tire monitor(s) 104 on the vehicle, e.g., via the location determination component 142.

The orientation determination component 134 may determine an orientation of the tire monitor(s) 104, and/or of one of the sensor(s) 106 (e.g., a three-axis accelerometer) associated with the tire monitor 104. For instance, and as detailed further herein, it may be possible to mount the tire monitor 104 in one of two orientations relative to the tire 102. For example, the two orientations may be different by 180-degrees of rotation. As will be appreciated, some measurements taken by the sensor(s) 106, e.g., accelerations in a longitudinal direction, will be different based on the orientation. Accordingly, the orientation may be required to properly normalize or otherwise interpret the sensor data generated at the tire monitor 104.

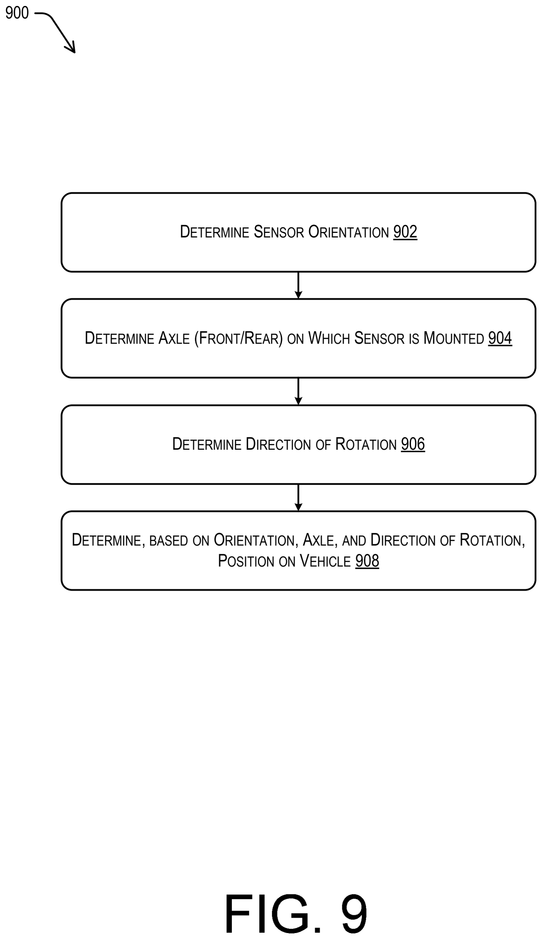

In some instances, the auto-location determination system 132 may include the memory 136, which may store the orientation of the monitor 104 relative to the vehicle 100/tire 102. In these examples, the orientation of the monitor 104 can be determined from the memory 136 stored within the auto-location determination system 132. For example, the memory 136 may be preprogrammed to contain computer readable media and/or information of the orientation of the accelerometer. In some instances, the orientation of the tire monitor 104 may be determined using longitudinal forces in the tire 102 as determined from the sensor(s) 106 and communicated to the auto-location determination system 132. A process for determining the orientation of the tire monitor 104 is detailed further below with reference to FIG. 9.

By way of example, and not limitation, the memory 136 (e.g., computer-readable storage media) can include volatile and non-volatile, removable and non-removable media implemented in any method or technology. The memory 136 may include, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

The front/rear axle determination component 138 may include functionality to determine if the tire monitor 104 is located on a front axle or a rear axle. For example, the front/rear axle determination component 138 can receive information from the sensor(s) 106 about a contact patch, e.g., a portion of the tire 102 that is in contact with the ground surface. For example, the front/rear axle determination component 138 can include functionality to determine a change in a dimension of the contact patch during an acceleration event. The contact patch and/or contact patch quotient refers to an amount of contact (e.g., a two-dimensional estimate of an angular percentage of a tire circumference in contact with the road) that the tire 102 makes with the ground, and under acceleration, the front axle may slightly lift, due to rotation of the vehicle 100 experienced around an X-axis, leading to a decrease in the contact patch for tires at the front axle. The sensor(s) 106 may communicate information to the front/rear axle determination component 138 of the auto-location determination system 132 detailing this change in contact patch and, the front/rear axle determination component 138, using those readings to locate and/or determine the association of the sensor(s) 106 associated with the front axle. Conversely, an increase in contact patch of the tire 102, under acceleration, would be associated with the rear axle. Additionally, the aforementioned pattern of contact patch increase/decrease reverses under deceleration. Specifically, during a deceleration event, the contact patch is expected to increase, e.g., elongate and/or widen, for tires associated with the front axle, and the contact patch is expected to decrease, e.g., shorten and/or narrow, for tires associated with the rear axle. In some instances, the pattern of contact patch increase/decrease indicative of an associated axle may be determined by the front/rear axle determination component 138. In some further instances, the pattern of contact patch increase/decrease indicative of an associated axle may be accessed, by the front/rear axle determination component 138, from the memory 136.

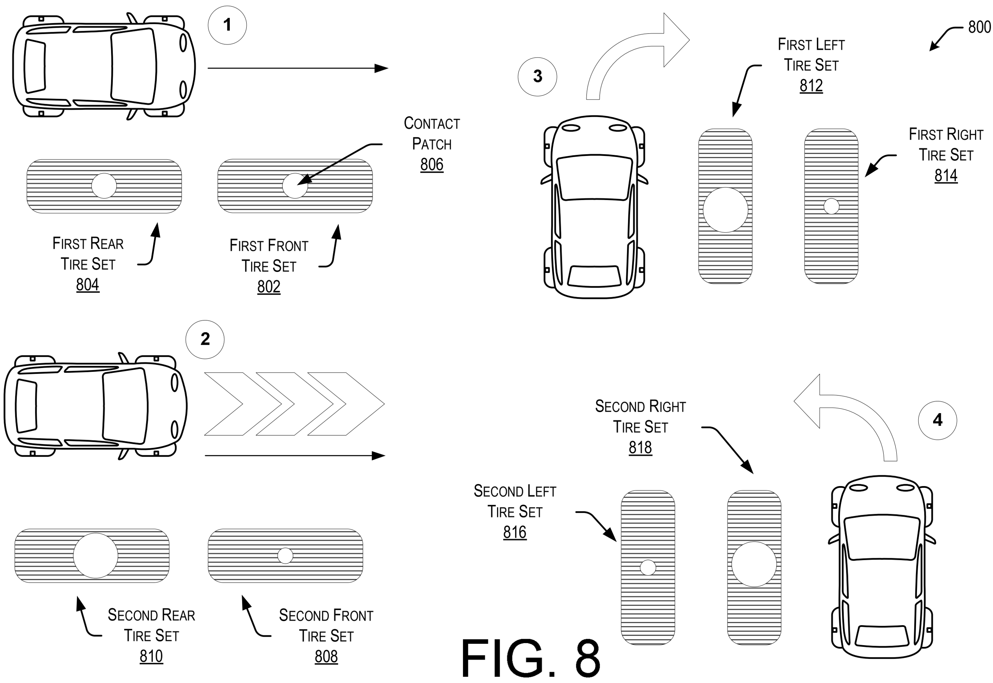

The auto-location determination system 132 may further include the vehicle side determination component 140. The vehicle side determination component 140 includes functionality to determine if a tire monitor is located on a left side (e.g., the driver side) or a right side (e.g., the passenger side) of the vehicle 100. For example, the vehicle side determination component 140 can include functionality to analyze information from the sensor(s) 106 about the contact patch, as well as about handling of the vehicle, e.g., from accelerometer(s) on the tire monitor(s) 104. For instance, the vehicle side determination component 140 can determine a side of the vehicle 100 with which a tire monitor 104 is associated based on a change in size of the contact patch during a cornering maneuver (e.g., turning). As described and above, the contact patch refers to the amount of contact that the tire 102 makes with the ground. A contact patch may be a two-dimensional area having a width, length, and/or other dimension from which the contact patch can be determined. In other examples, the contact patch can be characterized by a single dimension, e.g., length, width. Moreover, in some examples a change in tire deformation, e.g., a radial displacement of the tire at the contact area, may be used to indicate a change in load at the tire. In one example, during cornering in a right-hand direction, the vehicle 100 may slightly raise on the right side due to rotation experienced around a Y-axis of the vehicle 100. This rotation may cause the contact patch associated with the tires 102 on the right side of the vehicle 100 to decrease and the contact patch associated with the tires 102 on the left side of the vehicle 100 to increase, as may be seen in FIG. 8. The sensor(s) 106 may communicate information to the vehicle side determination component 140 of the auto-location determination system 132 associated with these changes in contact patch area. Accordingly or alternatively, the vehicle side determination component 140 may retrieve information from the sensor(s) 106. The vehicle side determination component 140 may use those readings to locate and/or otherwise associate the monitor(s) 104 with the appropriate side of the vehicle.

As will be appreciated, when the cornering maneuvering is a left-hand turn, the vehicle side determination component 140 would associate a tire having an increase in contact patch with the right side of the vehicle 100 and a tire having a decrease in contact patch with the left side of the vehicle 100. In some instances, the pattern of contact patch increase/decrease indicative of a direction of cornering may be determined by the vehicle side determination component 140. In some further instances, the pattern of contact patch increase/decrease indicative of an associated cornering direction may be accessed, by the vehicle side determination component 140, from the memory 136.

The cornering maneuvers and/or the acceleration events discussed above, can be determined from accelerations measured at accelerometers comprising the sensor(s) 106 of the tire monitor(s) 104. In other examples, the cornering events and/or acceleration events can be gleaned from other data and/or other sources. Without limitation, the front/rear axle determination component 138 and/or the vehicle side determination component 140 may receive vehicle control information from other or different sensor modalities, from one or more vehicle controllers in communication with the tire monitor(s) 104, and/or the like. Further, although aspects of this disclosure contemplate determining a location of a tire monitor 104 at the tire monitor 104, in other examples data from the sensor(s) 106, e.g., data used to determine attributes of a contact patch and/or about maneuvering of a tire 102, may be transmitted to the tire monitoring system 114 or other computing system to make appropriate associations of the tire monitor with positions on the vehicle 100.

The auto-location determination system 132 may further include the location determination component 142. The location determination component 142 may be used by the auto-location determination system 132 to auto-locate the location of the sensor(s) 106 to their respective tires 102 and/or to their respective tire vehicular position. For example, the location determination component 142 may utilize the determinations made by the other components contained within the auto-location determination system 132. For instance, the orientation determination component 134 may determine that a first sensor is in a first orientation, a second sensor is in the first orientation, a third sensor is in a second orientation, and a fourth sensor is in the second orientation, the second orientation being rotated 180 degrees from the first orientation. Further, the front/rear axle determination component 138 may have determined that, under acceleration, the first sensor and the second sensor experienced a decrease in contact patch (e.g., area, length, etc.), indicating that the first sensor and that the second sensor are located on the front axle. Conversely, the front/rear axle determination component 138 may determine that, under acceleration, the third sensor and the fourth sensor experienced an increase in contact patch (e.g., area, length, etc.), indicating that the third sensor and the fourth sensor are located on the rear axle. Additionally, the vehicle side determination component 140 may have determined that, from a right-hand cornering, that the first sensor and the third sensor experienced a decrease in contact patch (e.g., area, length, etc.), indicating that the first sensor and the third sensor are located on the right side of the vehicle 100. Conversely, during the same right-hand cornering, the vehicle side determination component 140 may have determined that the second sensor and the fourth sensor experienced an increase in contact patch (e.g., area, length, etc.), indicating that the second sensor and the fourth sensor are located on the left side of the vehicle 100. As such, the location determination component 142 may determine, from the auto-location determination system 132 components, that the first sensor is located on the front axle and on the left side of the vehicle 100. In such instances, the remaining sensor(s) 106, the second sensor, the third sensor, and the fourth sensor, may similarly have their locations automatically determined by their respective location determination components 142.

Accordingly or alternatively, where the sensor(s) 106 may be oriented differently, as such the orientation determination component 134 may determine the first sensor and the third sensor to be in the first orientation, and the second sensor and the fourth sensor to be in the second orientation. In such instances, the first orientation may be associated with the left side of the vehicle 100 and the second orientation may be associated with the right side of the vehicle 100. For example, when the tire monitors are mounted on the valve stem, since the valve stem is conventionally located at an outside of the vehicle, the orientation of the tire monitor(s) 104 may be determined. As such, the orientation determination component 134 may determine the respective orientations in the same and/or similar methods as described and alluded to herein. Additionally, the front/rear axle determination component 138 may, under acceleration, determine that the fourth sensor and the third sensor experienced an increase in contact patch, indicative of the rear axle. Conversely, the front/rear axle determination 138 may, under the same conditions, determine that the first sensor and the second sensor experienced a decrease in contact patch (e.g., area, length, etc.), indicative of the front axle. As such, the location determination component 142 may forgo functionality associated with the vehicle side determination component 140 to determine the respective locations of the monitor(s) 104. For example, using the orientation determination component 134 indicating that the first sensor and the third sensor are on the left side of the vehicle 100 and using the front/rear axle determination component 138 information that the first sensor is on the front axle and the third sensor is on the rear axle, the location determination component 142 may determine the location of the first sensor and the third sensor on the vehicle 100. Similarly, the location determination component 142 may determine the location of the second sensor and the fourth sensor in the same and/or similar process as described and alluded to herein.

In some further instances, the location determination component 142 may use the orientation determination 134 information, as described immediately above, and the vehicle side determination component 140 information to determine the locations of the monitor(s) 104. For example, the first sensor and the second sensor may be in the first orientation. Further, the third sensor and the fourth sensor may be in the second orientation. The first orientation may be associated with the front axle and the second orientation may be associated with the rear axle. As such, the vehicle side determination component 140 may, during a right turn, sense an increase in contact patch (e.g., area, length, etc.), in the first sensor and the third sensor. Additionally, under the same conditions, the vehicle side determination component 140 may sense a decrease in the contact patch (e.g., area, length, etc.), in the second sensor and the fourth sensor. As such, the location determination component 142 may forgo using the front/rear axle determination component 138 to determine the respective locations of the monitor(s) 104. For example, using the orientation determination component 134 information indicating that the first sensor and the second sensor are on the front axle of the vehicle 100 and using the vehicle side determination component 140 information indicating that the first sensor is on the left side of the vehicle 100 and the second sensor is on the right side of the vehicle 100, the location determination component 142 may determine the location of the first sensor and the second sensor on the vehicle 100. Similarly, the location determination component 142 may determine the location of the third sensor and the fourth sensor in the same and/or similar process as described and alluded to herein.

In some examples, where the front/rear axle determination component 138 and/ or the vehicle side determination component 140 information is redundant, the tire monitoring system 114 may nevertheless use the information to detect a sensor fault. For example, the orientation determination component 134 may determine that the first sensor is in the first orientation which is associated with the front axle. Further, the front/rear axle determination component 138 may, under acceleration, determine that the first sensor experienced an increase in contact patch (e.g., area, length, etc.), which would be associated with the rear axle. As such, a discrepancy between the orientation determination component 134 association indicating that the first sensor is located on the front axle and the front/rear axle determination component 138 association indicating that the first sensor is located on the rear axle may indicate a fault with the orientation determination component 134 and/or with the front/rear axle determination component 138. In some further examples, a discrepancy between the orientation determination component 134 and the vehicle side determination component 140 may indicate a fault, for the same and/or similar reasons as described and alluded to herein, between the aforementioned components. It should be appreciated that there may be additional and/or different indications of sensor faults as may be appreciated and/or apparent by one skilled in the art.

Accordingly or alternatively, the location determination component 142 may access the aforementioned determinations of the other components of the auto-location determination system 132 by accessing the information from the memory 136. As such, the location determination component 142 may compile the information stored in the memory 136 in the same and/or similar fashion as described and alluded to herein to actuate auto location of the monitor(s) 104 as associated with their respective tires 102. In some further instances, the location determination component 142 may store auto location information and/or associations (e.g., the first orientation being associated with the front axle, the first orientation being associated with the left side of the vehicle 100, etc.) from the orientation determination component 134, the front/rear axle determination component 138, and/or the vehicle side determination component 140. For example, any associations made by the aforementioned components 134, 138, and/or 140 may be rendered moot upon the vehicle 100 being serviced, the tires 102 being replaced, the tires 102 having their positions changed (e.g., "rotated"), and the like. As such, the location determination component 142 may auto locate the sensors and, via the components 134, 138, and/or 140 of the auto-location determination system 132, the memory 136 may have any associations updated. Additionally, updating any associations within the memory 136 may provide the tire monitoring system 114 an ability to detect sensor faults, as described and alluded to herein, during any subsequent auto location conducted by the auto-location determination system 132.

As will also be appreciated, the auto-location system 122 associated with the tire monitoring system 114 and the auto-location determination systems 132 associated with the individual tire monitor(s) 104 can each determine locations of tire monitors 104 on the vehicle 100. In some examples both systems may be included as in FIG. 1. For instance, the two systems may act as redundant systems. However, it also will be appreciated that the two systems are each configured to perform auto-location, and, thus, a vehicle may include only one or the other. As will also be appreciated, the tire monitoring system 114 and the auto-location determination system 132 implemented at the tire monitor 104 may be vehicle agnostic. That is, the systems and techniques detailed herein can be stand-alone systems that require no access to or information from the vehicle control system. Without limitations, the systems and techniques described herein may not require access to a CAN BUS of the vehicle 100 and/or to proprietary computing systems and/or protocols of the vehicle 100.

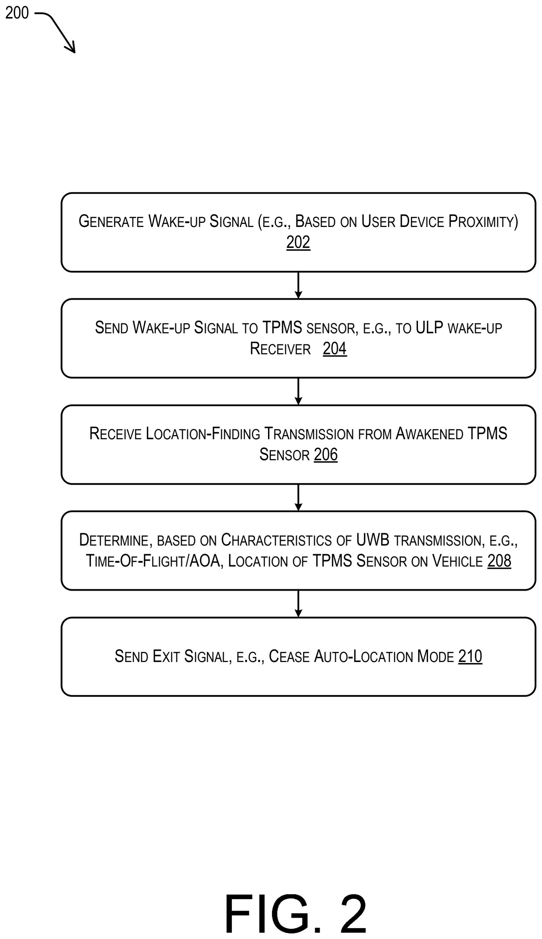

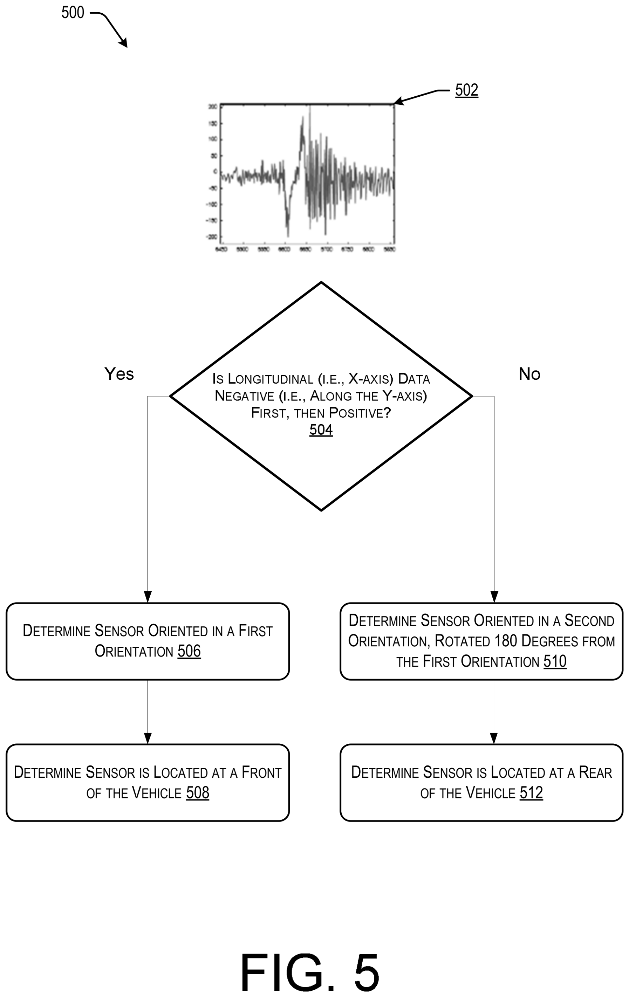

Additional details of the foregoing systems and techniques will be described further with reference to the following FIGS. Specifically, FIGS. 2-4 are used to demonstrate aspects, functionality, and/or features that may be associated with auto-location of the tire monitors 104 using the auto-location system 122 of the tire monitoring system 114, and FIGS. 5-9 are used to demonstrate aspects, functionality, and/or features associated with auto-location of tire monitors 104 using the auto-location determination system 132.

FIG. 2 is an example process 200 in accordance with aspects of the disclosure. The process is illustrated as logical flow graphs, with each operation representing a sequence of operations that can be implemented in software, hardware, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

The various illustrative operations, components, and systems described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

In more detail, FIG. 2 is a flowchart showing the example process 200 for auto locating the tire monitor(s) 104 and/or the tire sensor(s) 106. At 202, a wake-up signal may be generated. In some instances, the wake-up signal may be generated based at least in part on proximity of the electronic device 130 or of the user 128 to the vehicle 100. For example, the user 128 may approach the vehicle 100 with the electronic device 130. The electronic device 130 may advertise its presence over BLE. Accordingly or alternatively, the electronic device 130 may advertise its presence over Near Field Communication (NFC) technologies using the NFC transceiver(s) 120. As such, using BLE, the vehicle 100 may estimate the proximity of the electronic device 130 within, for example, 1.5 meters. Additionally, upon determining a presence of the user/device, the tire monitoring system 114 may turn on the first UWB transceiver(s) 110 and send a BLE command to the electronic device 130 to turn on its associated UWB transmitter. In such instances, the vehicle anchors (e.g., the first UWB transceiver(s) 110) may locate the UWB transmitter associated with the electronic device 130 to within +/- 0.1 m and track the location of the electronic device 130. In some examples, the tire monitoring system 114 may generate the wake-up signal when the electronic device 130 is within +/- 10 cm of the vehicle 100.

At 204, a wake-up signal may be sent by the tire monitoring system 114. In some examples, the wake-up signal may be sent via the second BLE transceiver(s) 116, to the sensor(s) 106, although the signal may be a type of signal other than a Bluetooth signal. For example, the vehicle 100 may determine that the electronic device 130 is within, for example, 30 cm, e.g., +/-10 cm, of the vehicle 100. As such, the second BLE transceiver(s) 116 may send the wake-up signal to the WuRx 112 of the tire monitor 104. As discussed above, the WuRx 112 may periodically wake up to listen for commands from the vehicle 100 (e.g., the second BLE transceiver(s) 116). As such, the WuRx 112 may receive the wake-up signal and wake up the first BLE transceiver(s) 108.

At 206, the tire monitoring system 114 may receive location-finding transmissions. In some examples, the operation 206 can include receiving UWB transmissions from the second UWB transceiver(s) 118 from the respective, awakened tire monitor(s) 104. For example, after the monitor(s) 104 are awakened, the monitor(s) 104, via the second UWB transceiver(s) 118, may send a transmission to the tire monitoring system 114. In other examples, the location-finding transmission may be received via high accuracy distance measurement channel sounding (HADM/CS).

At 208, the example process 200 may determine, based at least on the characteristics of the UWB transmission, a location of each of the respective monitor(s) 104. For example, the vehicle 100 may have one or more anchors (e.g., the second UWB transceiver(s) 118). As such, the tire monitoring system 114 may use High Accuracy Distance Measurement (HADM), Round Trip Time - Time of Flight (RTT-ToF), and/or similar techniques to determine the locations of the respective sensor(s) 106 and/or the tire monitors 104. In such instances, the second UWB transceiver(s) 118 may send one or more signals to a first tire monitor, a second tire monitor, a third tire monitor, and a fourth tire monitor, e.g., the four tire monitors 104 associated with the four tires 104, requesting a response. Additionally, the second UWB transceiver(s) 118 may be located at an unequal distance from the four monitor(s) 104. Additionally, the second UWB transceiver(s) 118 may respond to the first UWB transceiver(s) 110. For example, the first monitor, the second monitor, the third monitor, and the fourth monitor may timestamp the time that the signal was received. Additionally, the four monitor (s) 104 may transmit back a subsequent signal to the second UWB transceiver(s) 118 while incorporating the respective timestamps into the subsequent signal. As such, the second UWB transceiver(s) 118 may timestamp the subsequent signal received from each of the monitors. Analysis may be performed by the distance determination component 124 of the auto location component 122. The distance determination component 124 may analyze the difference in timestamps, while the shorter time differences may indicate a closer proximity to the second UWB transceiver(s) 118. Accordingly or alternatively, the foregoing process may include BLE transmission using the first BLE transceiver(s) 108 and the second BLE transceiver(s) 116. It should be appreciated that the foregoing signal transmitters are merely exemplary, and that any suitable transmitter(s) may be used.

Accordingly or alternatively, at 208, the example process 200 using HADM may further make use of Angle of Arrival (AoA) techniques for auto locating the sensor(s) 106. AoA technology may be available in Bluetooth 5.1, and, as such, may allow the tire monitoring system 114 to distinguish between the subsequent signals which sensor(s) 106 are located on the front and/or rear axles. For example, the anchor on the vehicle 100 may receive the subsequent signal from the respective monitors as discussed above. In addition to determining the difference in timestamps, as described and alluded to herein, the distance determination component 124 may determine the location of the sensor(s) 106 based upon differences in angular estimation. For example, the distance determination component 124 may measure respective angular phase shifts that occur between antennas when receiving the subsequent signals from the monitors 104. Using the determined angles of the subsequent signals, the distance determination component 124 may be able to identify a corresponding axle, associated with the sensor(s) 106, relative to a receiver of the tire monitoring system 114.

In some instances, one or more third BLE transceivers may be associated with the front axle of the vehicle. In some examples, the third BLE transceiver(s) may receive the subsequent signals from the sensor(s) 106 located on the front axle. In such instances, the auto location component 122, via the distance determination component 124, may accelerate the auto location process. For example, the distance determination component 124 may receive a signal from the third BLE transceiver(s), via the second BLE transceiver(s) 116, including HADM information associated with the front axle. Additionally, the second BLE transceiver(s) 116 may receive and/or provide HADM information associated with the rear axle. In such instances, the distance determination component 124 may receive a first set of information associated with the front axle and a second set of information associated with the rear axle. As such, the distance determination component 124 may use HADM information from the first set of information to determine locations of the sensor(s) 106 based on the time differences, relative to the third BLE transceiver(s). Similarly, the distance determination component 124 may determine locations of the sensor(s) 106 based on the time difference, relative to the second BLE transceiver(s) 116. Additionally, knowing the associated axles, the distance determination component 124 may determine the location of the first monitor, the second monitor, the third monitor, and the fourth monitor. Accordingly or alternatively, the forgoing may be accomplished using UWB transceiver(s). As such, one or more third UWB transceivers may be associated with the front axle of the vehicle. For example, the third UWB transceiver(s) may transmit a signal to the distance determination component 124, via the second UWB transceiver(s) 118, including RTT-ToF and AoA information associated with the front axle. Further, the second UWB transceiver(s) 118 may receive and/or provide RTT-ToF and AoA information associated with the rear axle. In such instances, distance determination component 124 may determine the location of the first monitor, the second monitor, the third monitor, and the fourth monitor.

At 210, the tire monitoring system 114 may send an exit signal to the tire monitor 104. For example, once the auto location component 122, via the distance determination 124 component, determines the location of each of the sensor(s) 106 and/or the tire monitor 104, the tire monitoring system 114 may send a signal to cease auto locating the sensor(s) 106. In some instances, the signal to cease auto locating the sensor(s) 106 may cause the first BLE transceiver(s) 108, the second UWB transceiver(s) 118, and/or any other suitable transceiver to go into a sleep mode and/or to reduce a frequency at which auto-location is performed.

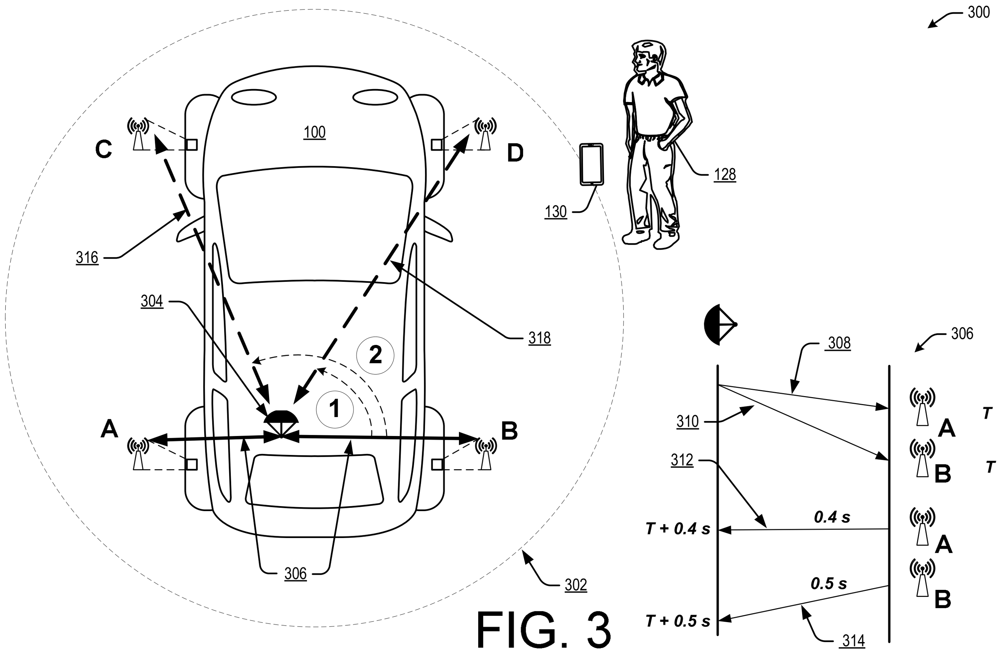

FIG. 3 is a schematic representation of a vehicle system 300 illustrating auto locating tire pressure sensor locations using time-of-flight and angle of arrival principles in stationary vehicles, in accordance with aspects of this disclosure. FIG.3 may be a representation of aspects of the process 200 just described.

As illustrated by FIG. 3, the vehicle 100 may include a proximity boundary 302. For instance, the proximity boundary may have a diameter of, for example, 3.0 m (e.g., a radius of 1.5 m), e.g., relative to a center of the vehicle 100. In other examples, the proximity boundary may be a radius about the tire monitoring system 114 and/or the second BLE transceiver(s) 116. In some instances, the proximity boundary 302 may correspond to a distance corresponding to a triggering event for the tire monitoring system 114. For instance, the user 128 may approach the vehicle 100 with the electronic device 130. As such, the electronic device 130 may advertise its presence using BLE technology. Additionally, when the electronic device 130 approaches the vehicle 100 and comes within the proximity boundary 302, the tire monitoring system 114 may turn on the second UWB transceiver(s) 118 and send a BLE command, via the second BLE transceiver(s) 116, to the electronic device 130 to turn on its associated UWB transceiver(s).

In some other instances, the anchors (e.g., the second UWB transceiver(s) 118) of the vehicle 100 may locate the UWB transceiver(s) associated with the electronic device within +/- 0.1m and track its location. In one example, once the electronic device 130 is within +/- 10 cm of the vehicle, doors associated with the vehicle 100 may be commanded to be unlocked. In some further instances, when the doors associated with the vehicle 100 are unlocked, the tire monitoring system 114 may broadcast a BLE command, via the second BLE transceiver(s) 161. The BLE command may instruct the monitor(s) 104 to perform one or more functions, such as to turn on the second UWB transceiver(s) 110. With the first UWB transceiver(s) 110 and the second UWB transceivers 118 activated, the anchors (e.g., second UWB transceiver(s) 118) may auto locate the monitors 104 based on their proximity to the anchors, as discussed above. As will be appreciated, auto location using the UWB transceiver(s) can be performed while the vehicle 100 is stationary.

In some further instances, the first BLE transceiver(s) 108 may be placed in a sleep mode. For example, the first BLE transceiver(s) 108 may be placed in the sleep mode to reduce power consumption and be coupled to the WuRx 112. As such, when the electronic device 130 meets the proximity boundary 302, the tire monitoring system 114 may, via the second BLE transceiver(s) 116 and/or some other transmitter, send a wake-up signal which may be received by the WuRx 112. In such instances the WuRx 112 may periodically wake up and listen for the wake-up signal. Further, in instances where the WuRx 112 receives the wake-up signal, the WuRx 112 may wake the first BLE transceiver(s) 108 and/or the first UWB transceiver(s) 110 to actuate auto location of the sensor(s) 106 and/or the tire monitors 104 of the vehicle while the vehicle is stationary as described and alluded to herein.

FIG. 3 further illustrates HADM and the principles of RTT-ToF and AoA. For example, a sensor A and a sensor B may be located along the rear axle of the vehicle 100. As such, on a locked differential rear axle, the rear tires may be traveling at the same speed. In some instances, auto location may be made more challenging. To overcome this challenge, an anchor 304 (e.g., the BLE transceiver(s) and/or the UWB transceiver(s) associated with the tire monitoring system 114) may be placed at an unequal distance from the rear tires, e.g., from the monitors associated with the tires (shown as monitors A and B). The anchor 304 may communicate with the monitor A and the monitor B via a communication 306. For example, the anchor 304 may transmit a first outbound signal 308 to the sensor and/or tire monitor A and a second outbound signal 310 to the sensor and/or tire monitor B. In some instances, the anchor 304 may transmit a single signal to both the sensor A and the sensor B. The sensor A and the sensor B may then receive the first outbound signal 308 and the second outbound signal 310, respectively. In such instances, the sensor A may send a first inbound signal 312 to the anchor 304 including a first send timestamp. Similarly, the sensor B may send a second inbound signal 314 the anchor 304 including a second send timestamp. Accordingly or alternatively, the anchor 304 may timestamp the first outbound signal 308 and the second outbound signal 310 at a time of sending. Additionally, the anchor 304 may receive the first inbound signal 312 and assign it a first received timestamp. Similarly, the anchor 304 may receive the second inbound signal 314 and assign it a second received timestamp. As such, the tire monitoring system 114, via the distance determination component 124, associated with the auto location component 122, may determine a first final timestamp and a second final timestamp. The first final timestamp may be the difference between the first send timestamp and the first received timestamp. Similarly, the second final timestamp may be the difference between the second send timestamp and the second received timestamp. As such, the distance determination component 124 may auto locate the monitor A and the monitor B based upon the first final timestamp and the second final timestamp. For example, by placing the anchor 304 an unequal distance from the monitor A and the monitor B, one of the monitors A, B will be located in closer proximity to the anchor 304. As such, one of a final timestamp, from the first final timestamp and the second final timestamp, will have a smaller difference in time indicative of the closer proximity, relative to the unequal location of the anchor 304. The techniques just described as locating two monitors based on distance from the anchor can also be applied to auto locate monitors C, D associated with the front axle in FIG. 3.

The anchor 304 as described and alluded to herein may be any signal generating device suitable including BLE, UWB, and the like. It should be appreciated that other signal generating devices may be contemplated that are suitable and/or that may become apparent by one skilled in the art.

FIG. 3 also illustrates AoA principles that may be utilized by the vehicle 100 in auto locating the monitors A, B, C, D. For example, the techniques and signals discussed above may be used to locate only the monitors A, B. Third and fourth monitors C, D may send a first communication 316 and a second communication 318. In such instances, the tire monitoring system 114 may use AoA principles to distinguish between the first communication 316 and the second communication 318. As such, the anchor 304 may receive the first communication 316 and the second communication 318. In such instances, the distance determination component 124, angle determination component 126, and/or the like may determine an angle "1" and an angle "2." For example, the distance determination component 124 may, in addition to determining a third final timestamp, associated with the sensor C, and a fourth final timestamp, associated with the sensor D, in accordance with the techniques just discussed, determine the location of the sensor C and the sensor D based at least upon the angle "1" and the angle "2." For example, the distance determination component 124 may measure respective angular phase shifts, of angle "1" and angle "2," that occur between antennas when receiving the first communication 316 and the second communication 318. From determining the angle "1" and the angle "2," the distance determination component 124 may be able to identify a corresponding quadrant or portion of the vehicle with which the monitor is associated, relative to the tire monitoring system 114. Additionally, the distance determination component 124, knowing the corresponding axle of the monitors C, D and the location of the anchor 304 that received the first communication 316 and the second communication 318, may combine the determination of the third final timestamp and the fourth final timestamp to determine which of the monitors C, D is closest in proximity to the anchor 304 to auto locate their respective locations on the vehicle 100.

The particular AoA principles discussed and alluded to herein are merely exemplary and should not be construed as limiting. As such, the vehicle 100 and/or tire monitoring system 114 may make use of any suitable AoA principle and/or another auto location technique. Further, additional and/or different suitable auto location techniques may be used which may become apparent to one skilled in the art.

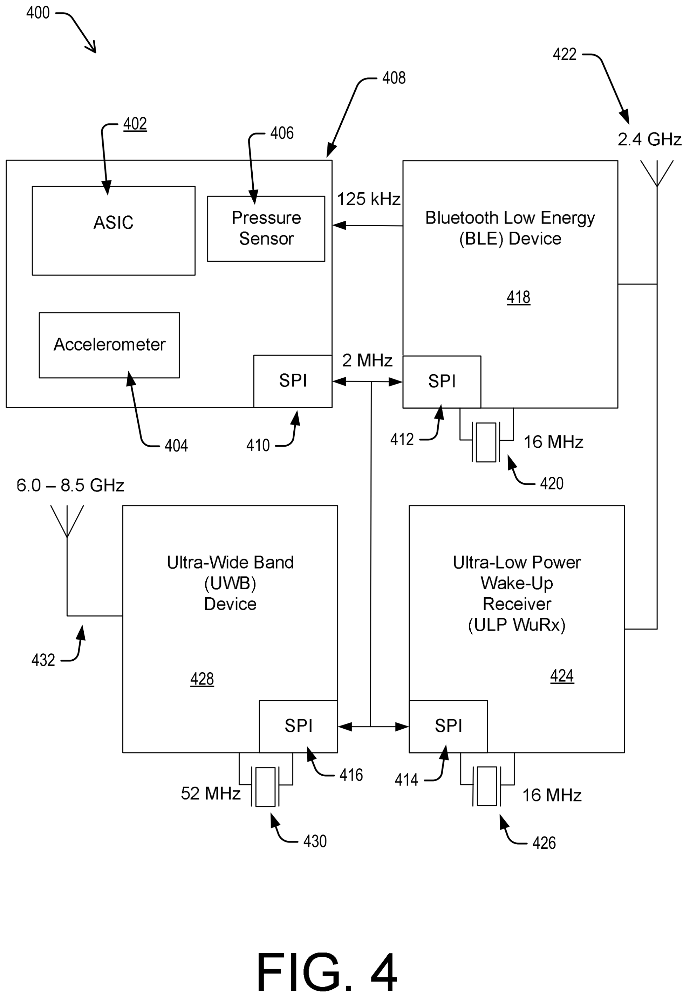

FIG. 4 is an example architecture 400 of one of the tire monitors 104. In the example of FIG. 4, the tire monitor 104 is illustrated as including a plurality of modules or other logically-connected computing blocks. For instance, various of the illustrated blocks and/or other aspects of the tire monitor 104 may be implemented in an intelligent hardware device, e.g., a central processing unit (CPU), a microcontroller, an application specific integrated circuit (ASIC) 402, or may be implemented as part of a reconfigurable device. Aspects of the tire monitor 104 can include random access memory (RAM) and read-only memory (ROM) which may include instructions that are configured to, when executed (or when compiled and executed), cause aspects of the tire monitor 104 to perform various functions described herein (including but not limited to the operations of the processes illustrated in FIG. 2 and discussed further herein. Various components of the tire monitor 104 may be implemented using one or more separate CPUs or ASICs, for example, and the components may, individually or collectively, be implemented with one or more ASICs adapted to perform some or all of the applicable functions in hardware. Each of the noted components may be a means for performing one or more functions related to operation of the system.

An ASIC 402, an accelerometer 404, and a pressure sensor 406 are shown with a control module 408 and a first serial peripheral interface (SPI) 410. The accelerometer 404 may be a three-axis accelerometer. The ASIC 402 may be configured to detect linear and/or angular acceleration as sensed by the accelerometer 404.

Additionally, the tire monitor shown in FIG. 4 includes a pressure sensor 406. The pressure sensor 406 is configured to sense a pressure within a tire to which the tire monitor is coupled, e.g., one of the tires 102. For example, the pressure sensor 406 can be one of the sensor(s) 106 discussed above. As will be appreciated, the pressure sensor 406 can generate data associated with a pressure of the tire, and the generated data can be used to determine any changes in contact patch (e.g., area, length, etc.) under conditions including acceleration, deceleration, right cornering, left cornering, and the like. Contact patch changes, under certain conditions, yield relational information that may aid in locating the locations of the sensor(s) 106.

As also shown in FIG. 4, the ASIC 402, the accelerometer 404, and the pressure sensor 406 are communicatively coupled to the control module 408. The control module 408 includes the SPI 410 which enables communication between a second SPI 412, a third SPI 414, and a fourth SPI 416. The SPIs 410, 412, 414, and 416 may operate on the same 2 MHz frequency. However, it should be appreciated that other frequencies may be used to facilitate communication between the SPIs 410-416 and/or any non-SPI methods of communication.

In more detail, the second SPI 412 may be coupled to a BLE device 418. Additionally, the BLE device 418 may communicate with the control module 408 to provide the ASIC 402 with an ASIC state machine scheduler clock. The ASIC state machine scheduler clock may be provided, by the BLE device 418, on a 125 kHz frequency. Additionally, the BLE device 418 integrated circuit (IC) may have a first crystal oscillator 420 for radio functionality. As such, the first crystal oscillator may operate on a 16 MHz frequency. Further, the BLE device may use a first antenna 422 which may operate on a 2.4 GHz frequency.

In more detail, the first antenna 422 may be used by the wake-up receiver 424. Additionally, the wake-up receiver 424 may include a second crystal oscillator 426 for radio functionality. Similarly, to the first crystal oscillator 420, the second crystal oscillator may operate on a 16 MHz frequency. As described and alluded to herein, the wake-up receiver 424 may communicate with a UWB device 428. The wake-up receiver 424 may communicate with the UWB device 428 via the third SPI 414 and the fourth SPI 416. The UWB device 428 may further include a third crystal oscillator 430 to facilitate radio communication. The third crystal oscillator 430 may operate on a 52 MHz frequency. Further, the UWB device 428 may use a second antenna 432. The second antenna 432 may be a wide-band antenna operating between 6.0-8.5 GHz frequencies and/or any other suitable frequencies as may be appreciated by one skilled in the art in light of this disclosure.

Although not shown in FIG. 4, the tire monitor 104 can include a number of additional components to facilitate the functionality described herein, as will be appreciated by those having ordinary skill in the art. For instance, the tire monitor 104 may include one or more external oscillators, which may be used to provide a reference frequency that is used in one or more RF components within the tire monitor 104. As is conventional in the art, the tire monitor 104 can also include a motion sensor, an external low frequency (LF) circuit, and/or a power source. For example, the motion sensor may generate sensor data and transmission may be initiated from the tire monitor 104, e.g., based on detected events from an accelerometer or other type of motion detection apparatus. The LF circuit may be used for receiving external inputs, and the power source, which may be a battery, may be used to provide power to the various components of the tire monitor 104. Additionally, the radio frequencies provided above and alluded to herein are merely exemplary and additional and/or different frequencies may be readily apparent to one skilled in the art to use and/or implement.

While FIGS. 2-4 have been used to demonstrate auto-location techniques using the tire monitoring system 114, FIGS. 5-9 illustrate aspects of auto-locating tire monitors at the tire monitor, e.g., independently of other tire monitors and/or without the need for information from other systems on the vehicle 100. More specifically, FIG. 5 will be used to describe a method 500 for determining an orientation of a tire monitor, such as one of the tire monitor(s) 104. For example, aspects of the method 500 can be performed by the orientation determination component 134 to determine an orientation of one of the sensor(s) 106 associated with a one of the tire(s) 102. For instance, the tire monitor(s) 104 and/or the sensor(s) 106 may be of a type that can be mounted in one of two ways to a tire. The method 500 may be used to determine which of these orientations is the actual, mounted orientation.

More specifically, FIG. 5 shows a data graph 502 representing data sensed by one of the sensor(s) 106. In the illustrated example, the graph 502 is a plot of lateral force versus time, e.g., taken during operation of the vehicle 100. The orientation determination component 134 of the auto-location determination system 132 may use the illustrated information and related associations in determining the orientation of the sensor(s) 106 within its respective tire 102. For example, each of the sensor(s) 106 may generate its own version of data graph 502 representing sensed information after operation of the vehicle.

At operation 504, the orientation determination component 134 may determine whether, from the data graph 502, the longitudinal (e.g., X-axis) data was negative (e.g., along the Y-axis) first and then became positive.

A determination by the orientation determination component 134 that the longitudinal data, as sensed and received from the sensor(s) 106, began negative and proceeded to become positive (e.g., a "Yes" at operation 504) may cause the method 500 to proceed to operation 506.

At operation 506, the orientation determination component 134 may determine that the sensor(s) 106 is oriented in a first orientation.

At operation 508, the orientation determination component 134 may further determine that the sensor(s) 106 is located at the front of the vehicle 100. The orientation determination component 134 may include an association between the determination at operation 506 to be indicative that the sensor(s) 106 and/or tire monitors 104 is located at the front of the vehicle 100 and/or may access the association from the memory 136 of the auto-location determination system 132. In an alternative instance, at operation 508, the orientation determination component 134 may determine that the sensor(s) 106 is located on the left side of the vehicle 100. The orientation determination component 134 may access the association for at least the same and/or similar aforementioned reasons.

A determination by the orientation determination component 134 that the longitudinal data, as sensed and received from the sensor(s) 106, did not begin negative and proceed to positive (e.g., a "No" at operation 504) may cause the method 500 to proceed to operation 510.

At operation 510, the orientation determination component 134 may determine that the sensor 106 is oriented in a second orientation, e.g., rotated 180-degrees from the first orientation.

At operation 512, the orientation determination component 134 may further determine that the sensor 106 under consideration is located at the rear of the vehicle 100. The orientation determination component 134 may include an association between the determination at operation 510 to be indicative that the sensor(s) 106 and/or tire monitors 104 is located at the rear of the vehicle 100 and/or may access the association from the memory 136 of the auto-location determination system 132.

In an alternative instance, at operation 512, the orientation determination component 134 may determine that the sensor(s) 106 is located on the right side of the vehicle 100. The orientation determination component 134 may access the association for at least the same and/or similar aforementioned reasons.

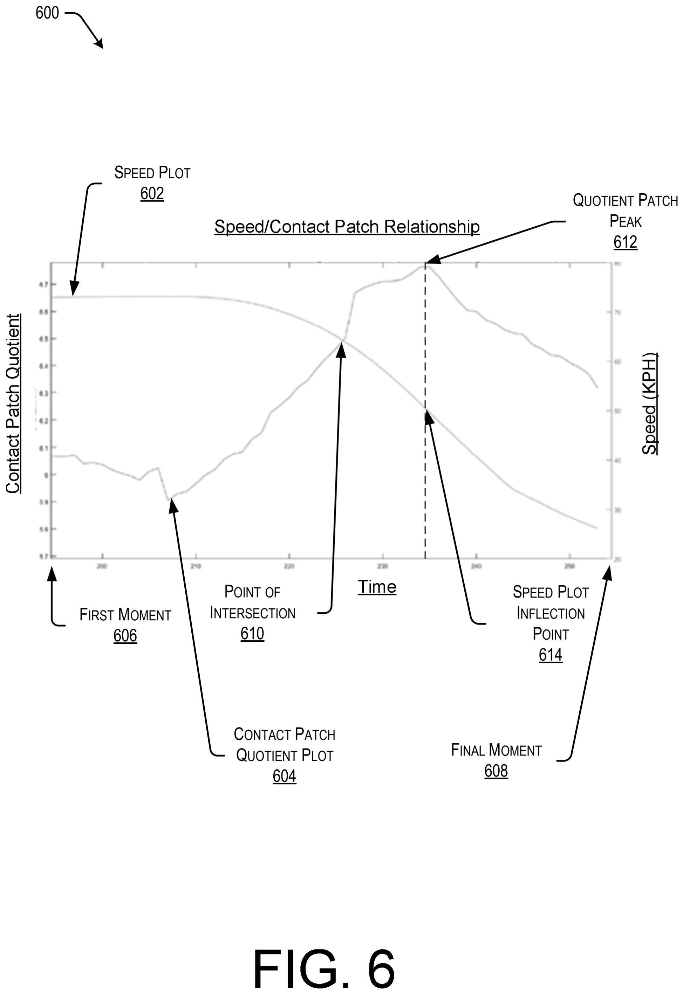

As just described, the process 500 of FIG. 5 can be used to determine an orientation of a tire monitor 104/sensor 106. Accordingly, a clockwise/counterclockwise rotation of the tire can be determined. In implementations, the orientation of the tire monitor 104 may be useful to auto-locate sensors/tires on the vehicle, but this information is not deterministic of a location of the sensor on the vehicle. For instance, the process of FIG. 5 may not determine whether a sensor is located on a front wheel or on a rear wheel. FIG. 6 illustrates an example graphical representation 600 demonstrating a relationship between a speed increase (e.g., acceleration) and a contact patch quotient . In some examples, data from the graphical representation 600 can be used, e.g., by the auto-location determination system 132 and/or the front/rear axle determination component 138, to determine whether a sensor is located on the front axle or on the rear axle of the vehicle.

FIG. 6 illustrates the graphical representation 600 showing the relationship between a speed plot 602 and a contact patch quotient plot 604. For instance, the graphical representation 600 starts at a first moment 606. At the first moment 606, the speed plot represents an elevated speed as measured in kilometers per hour (KPH). Additionally, at the first moment 606, the contact patch quotient plot 604 is represented at a value plotted below the speed of the speed plot 602 at the first moment. The relationship between the speed plot 602 and the contact patch quotient plot 604 can be seen as a function of time between the first moment 606 and a final moment 608. This is due to the relationship resulting from a change in speed over time (e.g., acceleration). As such, an inverse relationship may be understood by comparing the speed plot 602 to the contact patch quotient plot 604 between the first moment 606 and the final moment 608, specifically according to a point of intersection 610.

For example, the graphical representation 600 illustrates that as the speed plot 602 represents a decrease in speed over time (e.g., deceleration), the contact patch quotient plot 604 results in an increase in value. In addition to the inverse relationship, as illustrated by the graphical representation 600 of the change between the speed plot 602 and the contact patch quotient plot 604 over time, analysis of a quotient patch peak 612 further demonstrates the relationship. As such, the quotient patch peak 612 occurs at a speed plot inflection point 614. The speed plot inflection point 614 represents the maximum deceleration. Additionally, the speed plot inflection point 614 represents the change from increasing to decreasing deceleration. As such, for the time between the speed plot inflection point 614 and the final moment 608, representing decreasing deceleration (e.g., acceleration), a resulting decrease in contact patch quotient can be seen from the contact patch quotient plot 604.

In the example as illustrated by FIG. 6, assuming forward vehicle motion, the deceleration witnessed on the speed plot 602 and an accompanying increase in the contact patch quotient on the contact patch quotient plot 604 may represent the front axle. For example, the vehicle 100, under deceleration, may experience forward momentum as the vehicle slows. As such, the tires 102 at the front of the vehicle 100 may experience a loading of weight associated with the forward momentum. Further, the sensor(s) associated with the tires 102 at the front of the vehicle 100 may sense an increase in the contact patch quotient as the tires 102 are increasingly flattened against the ground from an increase in vertical load resulting from the relationship between weight and momentum. From the graphical representation 600 demonstrating the relationship between the speed over time (e.g., acceleration/deceleration) and the contact patch quotient, it can be determined that an increase in the contact patch quotient with an accompanying deceleration relationally implicates that the sensor is mounted to the front axle. Conversely, the shifting weight resulting from momentum may indicate, via the sensor(s) 106 and/or tire monitors 104 located on tires 102 located on the rear axle, a decrease in the contact patch quotient resulting from a rotation about the X-axis (as depicted in FIG. 1). Additionally, the foregoing relationship relates to deceleration and, under conditions of acceleration, the relationships are reversed.

Thus, data depicted in the graphical representation 600 is useful to determine whether a tire is located on a front axle or a rear axle of the vehicle. Combined with the orientation data determined using the process 500 of FIG. 5, an orientation and a front/rear axle placement can be determined. However, such information may not provide a left/right determination.

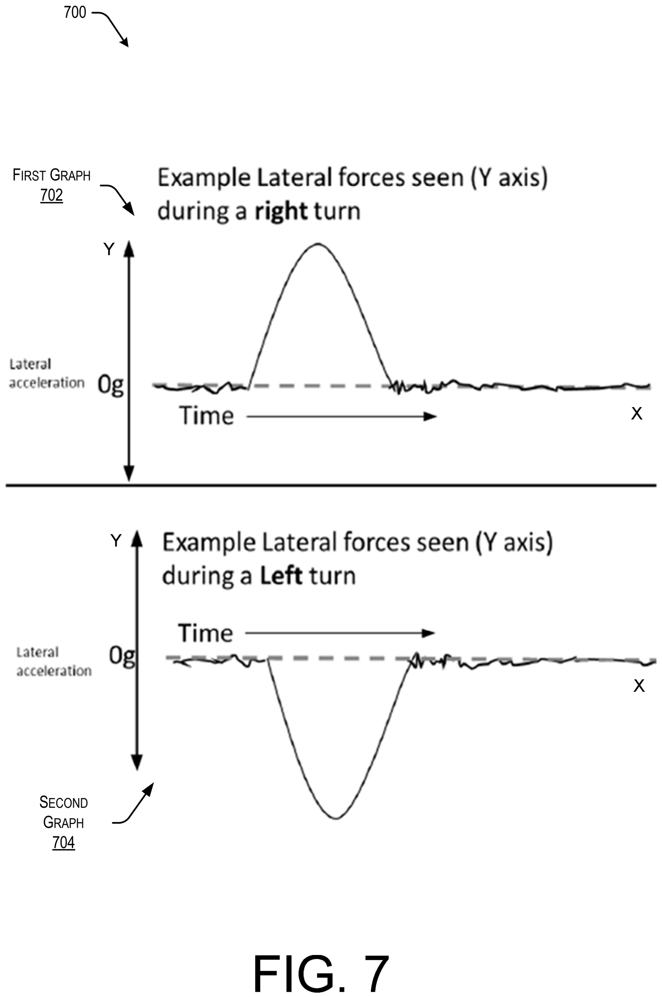

FIG. 7 illustrates an example graphical representation 700 demonstrating a relationship between a force (measured in g-forces), as measured by the sensor(s) 106, between a right-hand turn and a left-hand turn. Data represented by the graphical representation 700 may be used, e.g., by the auto-location determination system 132 and/or the vehicle side determination component 140.

As illustrated, FIG. 7 includes a first graph 702 representing an example plot of lateral forces detected during a right turn. The sensor(s) 106 may include one or more accelerometers configured to sense lateral acceleration and these readings may be graphed as illustrated. As such, during a right turn, lateral acceleration at the sensor 106 senses a positive (e.g., on the Y-axis) parabolic response demonstrating the right turn over time (e.g., on the X-axis). The vehicle side determination component 140 may, from the sensed information, determine that the right turn has been made. Accordingly or alternatively, the vehicle side determination component 140 may access the memory 136 of the auto-location determination system 132 to determine this association between the positive increase in force, of lateral acceleration, indicative of a right turn. Additionally, the vehicle side determination component 140 may, in combination with the acceleration/contact patch quotient relationship as detailed in FIG. 6, determine the location of sensor(s) 106 in the tires 102. For example, the vehicle side determination component 140 may determine that a right turn has been made due to the positive forces seen during the lateral acceleration. As such, increases in acceleration, as explained in reference to FIG. 6, correspond to increases in the contact patch quotient. So, the vehicle side determination component 140 may determine the right turn, an increase in contact patch quotient resulting from the right turn, and determine that the sensor(s) 106 experiencing the increased contact patch quotient are located on the left side of the vehicle 100.

Conversely, as illustrated in FIG. 7, a second graph 704 demonstrates example lateral forces present during a left turn. The lateral forces seen during the left turn are reversed (e.g., negative) from the forces seen in the first graph 702. As such, increases in acceleration, as explained in reference to FIG. 6, correspond to increases in the contact patch quotient for the rear axle, assuming forward vehicle motion. So, the vehicle side determination component 140 may determine, during the left turn, an increase in contact patch quotient resulting from the left turn, and determine that the sensor(s) 106 experiencing the increased contact patch quotient are located on the right side of the vehicle 100. The vehicle side determination component 140 may, from the sensed information, determine that the left turn has been made. Accordingly or alternatively, the vehicle side determination component 140 may access the memory 136 of the auto-location determination system 132 to determine this association between the negative decrease in force, of lateral acceleration, indicative of the left turn. As will be appreciated, the orientation of the monitor(s) 104 will be required to properly determine a direction of the lateral forces, e.g., to identify cornering maneuvers.

FIG. 8 illustrates an example visual representation 800 demonstrating a relationship between changes in contact patch quotients as subjected to contact speed, acceleration, and turning.

The relationship between contact patch and acceleration is further illustrated at "1" and "2" of the example visual representation 800. At 1, there is a first front tire set 802 and a first rear tire set 804. Additionally, a contact patch 806 is represented on the first front tire set 802 and the first rear tire set. At 1, an illustrated vehicle is traveling along a straight direction (e.g., along the arrow) and at a constant velocity. As such, dimensions of the contact patch 806 on the first front tire set 802 and the first rear tire set 804 are substantially equal, e.g., they have an equal length and/or width.

At 2, the illustrated vehicle has a second front tire set 808 and a second rear tire set 810. (As will be appreciated, the first front tire set 802 and the first front tire set 808 are the same tires and the first rear tire set 804 and the second rear tire set 810 are the same tires, but the tires are experiencing different conditions because of the varied maneuvering of the vehicle in the illustrative scenarios 1 and 2.) Additionally, the illustrated vehicle is traveling along a straight direction and at an increasing velocity (e.g., under acceleration). As such, the contact patch 806 is smaller on the second front tire set 808 and larger on the second rear tire set 810, in accordance with the relationship described with reference to FIG. 6.

At 3, the illustrated vehicle has a first left tire set 812 and a first right tire set 814. Additionally, the illustrated vehicle is performing a right turn maneuver. As such, the contact patch 806 is larger on the first left tire set 812 and smaller on the first right tire set 814. The increase and decrease in the contact patch, respectively, is in accordance with the relationship described in FIGS. 6-7. For instance, the contact patch 806 increases during a right turn due to rotation about the Y-axis, as depicted in FIG. 1, where lateral acceleration increases as depicted in FIG. 7.

At 4, the illustrated vehicle has a second left tire set 816 and a second right tire set 818. Additionally, the illustrated vehicle is performing a left turn maneuver. As such, the relationship, at 3, is reversed at 4. For example, the lateral acceleration is reversed, as depicted in FIG. 7, and so the contact patch 806 increase and decrease is similarly reversed.

As will be appreciated from the foregoing, by determining an orientation of the tire monitor 104 on the vehicle 100 (e.g., according to the techniques illustrated by FIG. 5), using contact patch changes to associate the monitor with the front axle or the rear axle (as in FIG. 6 and FIG. 8), and using contact patch changes to determine right or left side location (as in FIG. 7 and FIG. 8), the techniques described herein can auto-locate, which may be accomplished without the need of CAN and/or other onboard vehicle information, each of the tire monitors based on changing conditions associated with the tire, e.g., as the vehicle moves in the environment.

FIG. 9 is an example process 900 in accordance with aspects of the disclosure. The process is illustrated as logical flow graphs, with each operation representing a sequence of operations that can be implemented in software, hardware, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

The various illustrative operations, components, and systems described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

In more detail, FIG. 9 is a flowchart showing the example process 900 for auto locating tire monitors on a vehicle. Aspects of the process 900 may be performed by the auto-location determination system 132, while the vehicle is travelling in the environment.

At an operation 902, the auto-location determination system 132 may determine the orientation of individual of the sensor(s) 106. The auto-location determination system 132 may determine the orientation of the sensor(s) using the method 500. For example, the sensor(s) 106 may return graphed data that initially is negative before oscillating positive. As such, two of the sensor(s) 106 may be determined to be oriented in a first orientation. Additionally, those sensor(s) 106 may further be determined to be located at the front of the vehicle 100 which may be stored as an association in the memory 136. Alternatively, those sensor(s) 106 may be determined to be located at the left side of the vehicle 100. For sensed data graphed and demonstrating a positive beginning before oscillating negative, the sensor(s) may be determined to be oriented in a second orientation. As such, the sensor(s) 106 may further be determined to be located at the rear of the vehicle 100 which may be stored as an association in the memory 136. Alternatively, those sensor(s) 106 may be determined to be located at the right side of the vehicle 100.

At 904, the example process 900 may determine the axle on which the sensor(s) 106 are mounted, via the auto-location determination system 132. While, at 902, the axle on which the sensor(s) 106 are mounted may be determined, via the memory 136, there may be instances where this association is not stored in the memory 136. As such, the auto-location determination system 132 may determine the axle due to the relationship between acceleration and contact patch quotient. For example, the sensor(s) 106 in the first orientation, under acceleration, may experience a decrease in the contact patch quotient. As such, the auto-location determination system 132 may determine that the sensor(s) in the first orientation are located on the front axle. Similarly, in instances where the sensor(s) in the second orientation experience, under acceleration, an increase in the contact patch quotient, the auto-location determination system 132 may determine that the sensor(s) in the second orientation are located on the rear axle.

At 906, the example process 900 may determine the direction of rotation of the sensor(s) 106. For example, as illustrated in FIGS. 7 and 8, if the vehicle 100 turns to the right, the sensor(s) 106 may provide information indicating that two of the sensor(s) 106 experienced an increase in the contact patch 806 while the other two sensor(s) 106 experienced a decrease in the contact patch 806. Conversely, the foregoing increase/decrease in the contact patch 806, respectively, may be reversed during a left turn.

At 908, the example process 900 may determine the location of the sensor(s) using the sensor(s) 106 orientation, the determination of the axle that the sensor(s) 106 are located, and the direction of rotation.

In one example, a first sensor and a second sensor may be determined to be in the first orientation and a third sensor, and a fourth sensor may be determined to be in the second orientation. Further, under acceleration, first sensor and the second sensor, in the first orientation, may have experienced a decrease in contact patch indicative of a location on the front axle. Additionally, the third sensor and the fourth sensor, in the second orientation, may have experienced an increase in contact patch under the same acceleration indicative of a location on the rear axle. Additionally, during a right turn, the first sensor, in the first orientation, and the third sensor, in the second orientation, may experience an increase in contact patch. As such, at 908, the example process 900 may determine that the first sensor and the third sensor are located on the left side of the vehicle 100. Conversely, the example process may further determine that the second sensor and the fourth sensor are on the right side of the vehicle 100. The example process 900 may then, knowing that the first sensor is associated with the front axle and the left side, determine the location of the first sensor. Accordingly, the example process 900 may further determine the locations of the second sensors, the third sensor, and the fourth sensor.

In another example, the auto-location determination system 132 may access the memory 136 to determine an associated axle with the first orientation and the second orientation. For example, the first sensor and the second sensor may be determined to be in the first orientation. As such, the auto-location determination system 132 may access the memory 136 where the memory 136 may indicate that the first orientation is associated with the front axle. In such instances, operation 904 may be omitted. In some further instances, operation 904 may be included and results, indicative of the associated axle for the sensor(s) 106, may be used to validate results of the senor(s) 106 and/or diagnose a sensor fault. Additionally, it may have been determined that, during a right turn, the first sensor and the third sensor experienced an increase in contact patch. As such, the example process 900, at 906, may have determined that the first sensor and the third sensor are located on the left side of the vehicle 100. Conversely, at 906, it may have been determined that the second sensor and the fourth sensor are located on the right side of the vehicle. The example process 900 may then, knowing that the first sensor is associated with the front axle and the left side, determine the location of the first sensor. Accordingly, the example process 900 may further determine the locations of the second sensors, the third sensor, and the fourth sensor.

In a further example, the auto-location determination system 132 may access the memory 136 to determine an associated axle with the first orientation and the second orientation. For example, the first sensor and the third sensor may be determined to be in the first orientation. As such, the auto-location determination system 132 may access the memory 136 where the memory 136 may indicate that the first orientation is associated with the left side of the vehicle. In such instances, operation 906 may be omitted. In some further instances, operation 906 may be included and results, indicative of the associated side for the sensor(s) 106, may be used to validate results of the senor(s) 106 and/or diagnose a sensor fault. Additionally, it may have been determined that, during acceleration, the first sensor and the third sensor experienced a divergence in its respective contact patch. For example, the first sensor may experience a decrease in contact patch while the third sensor experienced an increase in contact patch. As such, the example process 900, at 906, may have determined that the first sensor is located on the front axle and that the third sensor is located on the rear axle of the vehicle 100. The example process 900 may then, knowing that the first sensor is associated with the front axle and the left side, determine the location of the first sensor. Accordingly, the example process 900 may further determine the locations of the second sensors, the third sensor, and the fourth sensor

As will be appreciated from the foregoing, in the examples described with reference to FIG. 5-9, auto-location of each tire monitor can be performed independently, e.g., locally on each monitor. That is, each of the tire monitor(s) 104 can include an instance of the auto-location determination system 132, to self-auto locate. In still further examples, each of the tire monitor(s) 104 can generate the data associated with accelerations and/or contact patch sizing and transmit that information to a processing system, e.g., the tire monitoring system 114 noted above, to determine an association of each of the tire monitor(s) 104. For example, determining the locations of the tires at a centralized location can reduce the amount of processing performed at each of the tire monitors 104 and/or allow for more reliable processing (e.g., to ensure that two monitors do not return a same position on the vehicle or the like).

As also discussed above, some aspects of this disclosure relate to auto-locating tire monitors 104 at the tire monitoring system 114. Moreover, while the techniques and systems of FIGS. 5-9 may require movement of the vehicle, e.g., to determine contact patch area during acceleration/deceleration and cornering, the techniques described herein in connection with FIG. 2-4 may be implemented without vehicle motion.

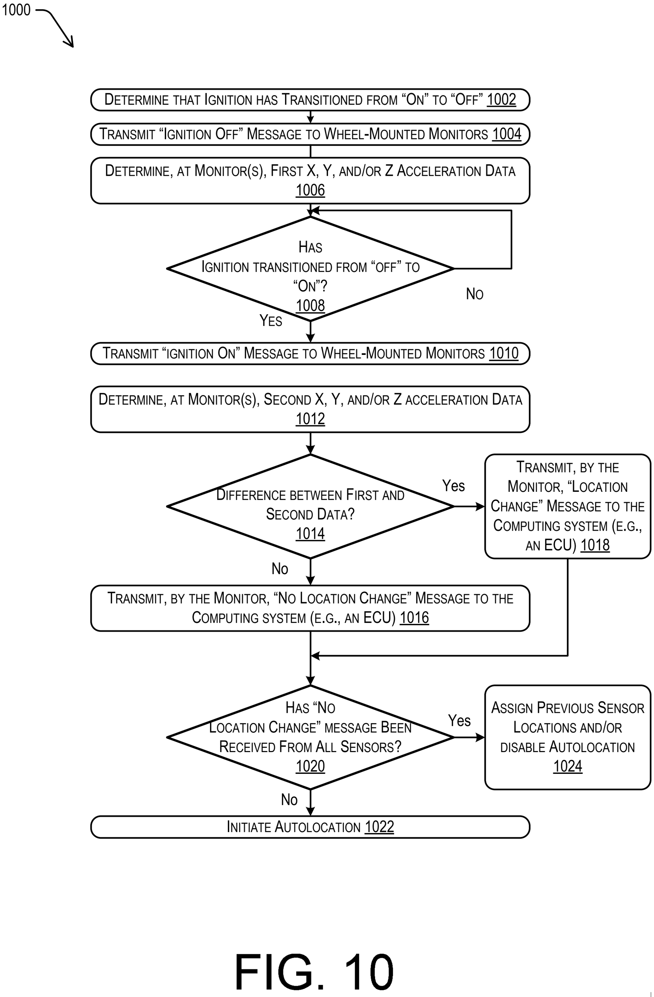

FIG. 10 illustrates an example process 1000 that may be used to determine whether tire monitor auto-location, e.g., using the systems, techniques, and/or processes described herein, should be performed.

Aspects of the process 1000 may assume that if a tire/wheel has been removed then its orientation (e.g., location on the vehicle) will have changed from when the vehicle was initially parked. Moreover, the change in orientation can be detected by a change in acceleration, e.g., a g measurement. The g measurement may correspond to a change in acceleration detected in the X-plane (e.g., a ground or horizontal plane, tangential to a circumference of a wheel/tire) and/or the Z-plane (e.g., a plane normal to ground, such as a vertical plane, and coincident with a radius of the wheel/tire) at the tire or wheel mounted monitor. For example, the process 1000 can generally be implemented at the wheel monitor, with individual of the wheel monitors determining if their orientation has changed, e.g., while the vehicle was parked. The individual sensors may then communicate their determinations to a computing system associated with the vehicle. Without limitation, if the process 1000 determines that an orientation of one of the tire monitors has changed while the vehicle is parked, the process 1000 can determine that auto-location should be performed. Alternatively, if the system sees no change from all monitors, the process 1000 can immediately determine monitor location, e.g., at key-on or drive off. In most, e.g., 99% of drive offs, when tires have not been relocated, the previously determined locations of the tire monitors can be used. As a result, the process 1000 can determine, nearly instantaneously (e.g., at key-on or drive off), tire positions, e.g., without the need to perform a relatively lengthy auto-location process. Stated differently, the process 1000 can efficiently and effectively determine whether auto-location is necessary, as opposed to conventional systems that automatically perform auto-location at vehicle start-up. Such auto-location routines can take up to ten minutes or more, despite the fact that they their outcome will be known over 90% of the time.

While, as noted above, the techniques of the process 1000 may be useful to determine whether one of the herein-described auto-location techniques is to be used. However, the process 1000 may be used to determine whether auto-location should be undertaken, e.g., regardless of the auto-location methods and/or techniques. Without limitation, the techniques described herein can be incorporated into conventional RF-based PAL solutions, BLE-based solutions, and/or the like.

In aspects, the process 1000 can include, when the vehicle is stationary, each tire monitor/sensor monitoring its orientation (in respect to gravity). For example, the monitors may determine if they are in stationary mode if they do not sense a change in centrifugal offset that is associated with vehicle driving (e.g.; an offset with a value over several g). In another example, using BLE or similar bidirectional communications, a vehicle based computing system, e.g., an ECU, can inform each sensor/monitor when the ignition has been turned off (or similar action indicative of the vehicle being turned off, e.g., the doors have been closed after the engine is turned off). An operation 1002 in FIG. 10 illustrates determining the stationary mode based on the ignition being turned off, and an operation 1004 illustrates transmitting the "ignition off" or other "stationary mode" instructions to the individual tire monitors.

Based on this communication, the monitors, e.g., each of the monitors, can initiate stationary monitoring or enter a stationary mode. In the stationary mode, each monitor periodically monitors one or both of its X and Z plane accelerometers, e.g., at an operation 1006. Some conventional tire monitors sample an accelerometer once every 10 seconds in order to detect if the vehicle is in motion - in order to increase the pressure sample and data transmission rate when driving has been detected. The operation 1006 may sample at this rate or at some other rate. In aspects of this disclosure, if a tire monitor sensor detects a change of orientation (represented as a change in acceleration due to gravitational angular offset) whilst the vehicle is stationary, then the monitor may alert the vehicle-based ECU. Alternatively, and as above, if the TPM system is equipped with BLE, then the ECU can poll/interrogate each sensor at key on (e.g., at an operation 1010), or at some other action indicative of an intent to drive the vehicle, to determine if its orientation has changed during the stationary period. For instance, at an operation 1012, the monitor can monitor one or both of its X- and/or Z-plane accelerometers and compare, at an operation 1014, the measurements to determine whether a change has occurred.

If, during the stationary period or after interrogation at key on, the ECU has not been informed of any change in orientation (e.g., at an operation 1016 and/or 1020) from any of its wheel-based sensors and/or tire monitors then it can assume that the wheel locations have not changed since the previous journey and an auto-location routine is not required to be initiated (e.g., at an operation 1024). Additionally on drive off, each sensor can inform (transmit) the duration of its stationary (fixed orientation period). If each sensor's value aligns with that of the vehicle, then a system auto-location is not required, thereby enabling instantaneous sensor vehicular location at drive off. Alternatively, if at the operation 1014 and/or 1020 it is determined that there is a location change, auto-location is initiated at an operation 1022.

Some conventional systems may not include determining, at the sensor, that there is a change in orientation. Rather, some conventional systems may rely on each sensor transmitting a stationary acceleration value at the end of the stationary period and the vehicle ECU deciding if any or each sensor has moved. This solution is flawed in that there is no means for the sensor to determine when this stationary period has ended. Generally, ending a stationary period requires the sensor to detect motion, which in turn will change the sensor orientation, thereby defeating the purpose of this disclosure. By making the movement determination at the sensor/monitor, the process 1000 provides improvements over these conventional systems.

As apparent from the foregoing, aspects of this disclosure also provide improved detection of potential sensor anomalies. For example, aspects of this disclosure can provide sensor information not only to a user interface in the vehicle, as in conventional systems, but also to a remote computing device associated with a vehicle owner, a technician, a passenger, or other person associated with a vehicle of tire sensor anomalies or other sensor-related issues.

### EXAMPLE CLAUSES

A: An example tire monitor configured for coupling to a tire of a vehicle in at least a first orientation or a second orientation, the tire monitor including: an accelerometer configured to generate acceleration data; a sensor configured to generate sensor data associated with an area of contact of the tire with a road surface; and a computing system configured to perform operations comprising: determining, based at least in part on the acceleration data, that the tire monitor is mounted in an orientation comprising the first orientation or the second orientation; determining, based at least in part on the orientation and the sensor data, that the tire is coupled to a front axle of the vehicle or that the tire is coupled to a rear axle of the vehicle; and determining, based at least in part on the orientation and the sensor data, that the tire is coupled to a left side of the vehicle or that the tire is coupled to a right side of the vehicle.
B: The tire monitor of example A, wherein the determining that the tire is coupled to the front axle or that the tire is coupled to the rear axle comprises: determining, from the acceleration data, an acceleration event associated with the vehicle traveling in a forward direction; determining, from the sensor data, a change in a contact patch size during the acceleration event; and determining that the tire is coupled to the front axle or that the tire is coupled to the rear axle based on the change in the contact patch size.
C: The tire monitor of example A or example B, wherein the acceleration event comprises an increase in acceleration and determining that the tire is coupled to the front axle or that the tire is coupled to the rear axle further comprises: determining that the tire is coupled to the rear axle in response to determining that the size of the contact patch increases during the acceleration event; and determining that the tire is coupled to front axle in response to determining that the size of the contact patch decreases during the acceleration event.
D: The tire monitor of any one of example A through example C, wherein the acceleration event comprises a deceleration and determining that the tire is coupled to the front axle or that the tire is coupled to the rear axle further comprises: determining that the tire is coupled to the rear axle in response to determining that the size of the contact patch decreases during the acceleration event; and determining that the tire is coupled to the front axle in response to determining that the size of the contact patch increases during the acceleration event.
E: The tire monitor of any one of example A through example D, wherein the determining that the tire is coupled to a left side of the vehicle or that the tire is coupled to a right side of the vehicle comprises: determining, from the acceleration data, a cornering event associated with the vehicle; and determining, from the sensor data, a change in a contact patch size during the cornering event; and determining that the tire is coupled to a left side of the vehicle or that the tire is coupled to the right side of the vehicle based on the change in the contact patch size during the cornering event.
F: The tire monitor of any one of example A through example E, wherein the cornering event comprises a right turn and the determining that the tire is coupled to a left side of the vehicle or that the tire is coupled to a right side of the vehicle comprises: determining that the tire is coupled to the left side of the vehicle in response to determining that the size of the contact patch increases during the cornering event; and determining that the tire is coupled to the right side of the vehicle in response to determining that the size of the contact patch decreases during the cornering event.
G: The tire monitor of any one of example A through example F, wherein the cornering event comprises a left turn and the determining that the tire is coupled to a left side of the vehicle or that the tire is coupled to a right side of the vehicle comprises: determining that the tire is coupled to the left side of the vehicle in response to determining that the size of the contact patch decreases during the cornering event; and determining that the tire is coupled to the right side of the vehicle in response to determining that the size of the contact patch increases during the cornering event.
H: The tire monitor of any one of example A through example G, wherein the determining the orientation of the tire monitor comprises: determining, based at least in part on the acceleration data, a magnitude and a direction of a lateral force on the tire monitor over time; and determining the first orientation or the second orientation based on magnitude and the direction of the lateral force on the tire monitor over time.
I: An example method for auto locating a tire monitor on a vehicle, the tire monitor being associated with a tire on the vehicle, the method including: receiving, from an accelerometer associated with the tire monitor, acceleration data; receiving, from a sensor associated with the tire monitor, sensor data associated with an area of contact of the tire with a road surface; and determining, based at least in part on the acceleration data and the sensor data, a location of the tire on the vehicle.
J: The method of example I, wherein the determining the location of the tire on vehicle comprises: determining that the tire is associated with a front axle or a rear axle; and determining that the tire is associated with a right side of the vehicle or a left side of the vehicle.
K: The method of example I or example J, wherein the determining that the tire is associated with the front axle or the rear axle comprises: determining, from the acceleration data, an acceleration event of the vehicle traveling in a forward direction; and determining, from the sensor data, a change in a dimension of a contact patch during the acceleration event.
L: The method of any one of example I through example K, further comprising: determining that the acceleration event is an increase in acceleration; and determining that the tire is associated with the rear axle in response to an increase in the dimension of the contact patch during the acceleration event; or determining that the tire is associated with the front axle in response to a decrease in the dimension of the contact patch during the acceleration event.
M: The method of any one of example I through example L, further comprising: determining that the acceleration event is a deceleration of the vehicle; and determining that the tire is associated with the front axle in response to an increase in the dimension of the contact patch during the acceleration event; or determining that the tire is associated with the rear axle in response to a decrease in the dimension of the contact patch during the acceleration event.
N: The method of any one of example I through example M, wherein the determining that the tire is associated with the right side of the vehicle or the left side of the vehicle comprises: determining, from the acceleration data, a cornering event; and determining, from the sensor data, a change in a dimension of a contact patch during the cornering event.
O: The method of any one of example I through example N, further comprising: determining that the cornering event is a right turn of the vehicle; and determining that the tire is associated with the right side of the vehicle in response to a decrease in the dimension of the contact patch during the cornering event; or determining that the tire is associated with the left side of the vehicle in response to an increase in the dimension of the contact patch during the cornering event.
P: The method of any one of example I through example O, further comprising: determining that the cornering event is a left turn of the vehicle; and determining that the tire is associated with the right side of the vehicle in response to an increase in the dimension of the contact patch during the cornering event; or determining that the tire is associated with the left side of the vehicle in response to a decrease in the dimension of the contact patch during the cornering event.
Q: The method of any one of example I through example P, further comprising: determining, based at least in part on the acceleration data, an orientation of the tire monitor relative to the vehicle, the orientation comprising one of a first orientation or a second orientation rotated 180-degrees relative to the first orientation.
R: An example system includes: a vehicle; tires associated with the vehicle; a tire monitor associated with one of the tires, the tire monitor comprising an accelerometer and a sensor; and a computing system configured to perform operations comprising: receiving, from the accelerometer, acceleration data; receiving, from the sensor, sensor data associated with an area of contact of the tire with a road surface; and determining, based at least in part on the acceleration data and the sensor data, a location of the tire on the vehicle.
S: The system of example R, wherein the determining the location of the tire on vehicle comprises: determining that the tire is associated with a front axle or a rear axle; and determining that the tire is associated with a right side of the vehicle or a left side of the vehicle.
T: The system of example R or example S, wherein the computing system is located on the tire monitor.
AA: An example vehicle includes: a plurality of tires; a plurality of tire monitors, individual of the plurality of tire monitors being associated with individual of the plurality of tires and including at least one tire monitor transceiver; and a tire pressure monitoring system spaced from the plurality of tires, the tire pressure monitor system including at least one tire pressure monitoring system transceiver and a computing system configured to perform operations comprising: transmitting, via the at least one tire pressure monitoring system transceiver, one or more first transmission signals; receiving, from the at least one tire monitor transceiver of the plurality of tire monitors and at least in part in response to the one or more first transmission signals, first response signals; determining, based at least in part on the first response signals, a round trip time and an angle of arrival; and determining, for the individual of the plurality of tire monitors and based at least in part on at least one of the round trip time, the angle of arrival, or a distance measurement, a location of the plurality of tire monitors on the vehicle.
BB: The vehicle of example AA, wherein the at least one tire monitor transceiver comprises one or more first Bluetooth Low Energy (BLE) transceivers and the at least one tire monitoring system transceiver comprises one or more second BLE transceivers.
CC: The vehicle of example AA or example BB, the operations further comprising: transmitting, via the one or more second BLE transceivers, a wake-up signal to wake the one or more first BLE transceivers from a sleep mode.
DD: The vehicle of any one of example AA through example CC, wherein: the individual of the plurality of tire monitors further comprise a Wake-Up Receiver (WuRx) configured to receive the wake-up signal; and the WuRx is configured to wake the one or more second BLE transceivers from the sleep mode.
EE: The vehicle of any one of example AA through example DD, wherein the WuRx is a low-power receiver that monitors for the wake-up signal at a lower energy requirement than the one or more first BLE transceivers.
FF: The vehicle of any one of example AA through example EE, wherein: the at least one tire pressure monitoring system transceiver comprises one or more first Ultra-Wide Band (UWB) transceivers; the at least one tire monitor transceiver comprises one or more second UWB transceivers; the one or more first transmission signals are UWB frequency transmission signals; and the response signals are UWB frequency transmission signals.
GG: The vehicle of any one of example AA through example FF, the operations further comprising: determining a triggering event; and transmitting at least one of the one or more first transmission signals or a wake up signal in response to the triggering event.
HH: The vehicle of any one of example AA through example GG, the operations further comprising: receiving, from an electronic device external to the vehicle, a presence signal indicating a presence of the electronic device within a proximity boundary of the vehicle; and determining the triggering event based at least in part on the presence of the electronic device.
II: The vehicle of any one of example AA through example HH, wherein the electronic device comprises at least one of a mobile device or a key fob.
JJ: The vehicle of any one of example AA through example II, wherein an antenna associated with the at least one tire pressure monitoring system transceiver is disposed at a position that is unequally spaced from individual antennas associated with the at least one tire monitor transceiver of the plurality of tire monitors.
KK: An example method for auto locating tire monitors on a vehicle, the method including: transmitting, via an antenna associated with a tire pressure monitoring system on a vehicle, one or more transmission signals; receiving, from a plurality of tire monitors and at least in part in response to the one or more transmission signals, response signals; and determining, based at least in part on the response signals and a position of the antenna on the vehicle, locations of the plurality of tire monitors on the vehicle relative to the antenna.
LL: The method of example KK, wherein the one or more transmission signals and the response signals are one or more of ultra-wide band or Bluetooth signals.
MM: The method of example KK or example LL, wherein the determining the locations of the plurality of tire monitors comprises: determining a first time associated with a first response signal of the response signals, the first response signal being received from a first tire monitor of the plurality of tire monitors; determining, based at least in part on the first time, a first distance from the antenna to the first tire monitor; determining, based on the first distance, a first location of the first tire monitor; determining a second time associated with a second response signal of the response signals, the second response signal being received from a second tire monitor of the plurality of tire monitors; determining, based at least in part on the second time, a second distance from the antenna to the first tire monitor; and determining, based on the second distance, a second location of the second tire monitor.
NN: The method of any one of example KK through example MM, wherein the antenna is positioned on the vehicle such that the first distance is different from the second distance, is different from a third distance to a third tire monitor of the plurality of tire monitors, and is different from a fourth distance to a fourth tire monitor of the plurality of tire monitors.
OO: The method of any one of example KK through example NN, wherein the determining the locations of the plurality of tire monitors comprises: determining a first angle associated with a first response signal of the response signals, the first response signal being received from a first tire monitor of the plurality of tire monitors; determining, based at least in part on the angle, a first location of the first tire monitor on the vehicle, relative to the antenna of the tire pressure monitoring system; determining a second angle associated with a second response signal of the response signals, the second response signal being received from a second tire monitor of the plurality of tire monitors; and determining, based on the second angle, a second location of the second tire monitor on the vehicle, relative to the antenna of the tire pressure monitoring system.
PP: The method of any one of example KK through example OO, further comprising: determining a triggering event; and transmitting at least one of the one or more transmission signals or a wake up signal in response to the triggering event.
QQ: The method of any one of example KK through example PP, further comprising: receiving, from an electronic device external to the vehicle, a presence signal indicating a presence of the electronic device within a proximity boundary of the vehicle; and determining the triggering event based at least in part on the presence of the electronic device.
RR: An example system includes: a vehicle; a plurality of tires associated with the vehicle; a plurality of tire monitors associated with the plurality of tires; and a tire pressure monitoring system spaced from the plurality of tires, the tire pressure monitor system including at least one tire pressure monitoring system transceiver and a computing system configured to perform operations comprising: transmitting one or more transmission signals; receiving, from the plurality of tire monitors and at least in part in response to the one or more transmission signals, response signals; and determining, based at least in part on the response signals and a position of the tire pressure monitoring system on the vehicle, locations of the plurality of tire monitors on the vehicle.
SS: The system of example RR, wherein the determining the locations of the plurality of tire monitors comprises: determining a first time associated with a first response signal of the response signals, the first response signal being received from a first tire monitor of the plurality of tire monitors; determining, based at least in part on the first time, a first distance from the antenna to the first tire monitor; determining, based on the first distance, a first location of the first tire monitor; determining a second time associated with a second response signal of the response signals, the second response signal being received from a second tire monitor of the plurality of tire monitors; determining, based at least in part on the second time, a second distance from the antenna to the first tire monitor; and determining, based on the second distance, a second location of the second tire monitor.
TT: The system of example RR or example SS, wherein the determining the locations of the plurality of tire monitors comprises: determining a first angle associated with a first response signal of the response signals, the first response signal being received from a first tire monitor of the plurality of tire monitors; determining, based at least in part on the angle, a first location of the first tire monitor on the vehicle, relative to the antenna of the tire pressure monitoring system; determining a second angle associated with a second response signal of the response signals, the second response signal being received from a second tire monitor of the plurality of tire monitors; and determining, based on the second angle, a second location of the second tire monitor on the vehicle, relative to the antenna of the tire pressure monitoring system.

While the subject technology has been described with respect to preferred embodiments, those skilled in the art will readily appreciate that various changes and/or modifications can be made to the subject technology without departing from the spirit or scope of the subject technology. For example, each claim may depend from any or all claims in a multiple dependent manner even though such has not been originally claimed.

## Claims

1. A tire monitor configured for coupling to a tire of a vehicle in at least a first orientation or a second orientation, the tire monitor comprising:
an accelerometer configured to generate acceleration data;
a sensor configured to generate sensor data associated with an area of contact of the tire with a road surface; and
a computing system configured to perform operations comprising:
determining, based at least in part on the acceleration data, that the tire monitor is mounted in an orientation comprising the first orientation or the second orientation;
determining, based at least in part on the orientation and the sensor data, that the tire is coupled to a front axle of the vehicle or that the tire is coupled to a rear axle of the vehicle; and
determining, based at least in part on the orientation and the sensor data, that the tire is coupled to a left side of the vehicle or that the tire is coupled to a right side of the vehicle.

2. The tire monitor of claim 1, wherein the determining that the tire is coupled to the front axle or that the tire is coupled to the rear axle comprises:
determining, from the acceleration data, an acceleration event associated with the vehicle traveling in a forward direction;
determining, from the sensor data, a change in a contact patch size during the acceleration event; and
determining that the tire is coupled to the front axle or that the tire is coupled to the rear axle based on the change in the contact patch size.

3. The tire monitor of claim 2, wherein the acceleration event comprises an increase in acceleration and determining that the tire is coupled to the front axle or that the tire is coupled to the rear axle further comprises:
determining that the tire is coupled to the rear axle in response to determining that the size of the contact patch increases during the acceleration event; and
determining that the tire is coupled to front axle in response to determining that the size of the contact patch decreases during the acceleration event.

4. The tire monitor of claim 2, wherein the acceleration event comprises a deceleration and determining that the tire is coupled to the front axle or that the tire is coupled to the rear axle further comprises:
determining that the tire is coupled to the rear axle in response to determining that the size of the contact patch decreases during the acceleration event; and
determining that the tire is coupled to the front axle in response to determining that the size of the contact patch increases during the acceleration event.

5. The tire monitor of claim 4, wherein the determining that the tire is coupled to a left side of the vehicle or that the tire is coupled to a right side of the vehicle comprises:
determining, from the acceleration data, a cornering event associated with the vehicle;
determining, from the sensor data, a change in a contact patch size during the cornering event; and
determining that the tire is coupled to a left side of the vehicle or that the tire is coupled to the right side of the vehicle based on the change in the contact patch size during the cornering event.

6. The tire monitor of claim 5, wherein the cornering event comprises a right turn and the determining that the tire is coupled to a left side of the vehicle or that the tire is coupled to a right side of the vehicle comprises:
determining that the tire is coupled to the left side of the vehicle in response to determining that the size of the contact patch increases during the cornering event; and
determining that the tire is coupled to the right side of the vehicle in response to determining that the size of the contact patch decreases during the cornering event.

7. The tire monitor of claim 5, wherein the cornering event comprises a left turn and the determining that the tire is coupled to a left side of the vehicle or that the tire is coupled to a right side of the vehicle comprises:
determining that the tire is coupled to the left side of the vehicle in response to determining that the size of the contact patch decreases during the cornering event; and
determining that the tire is coupled to the right side of the vehicle in response to determining that the size of the contact patch increases during the cornering event.

8. The tire monitor of claim 1, wherein the determining the orientation of the tire monitor comprises:
determining, based at least in part on the acceleration data, a magnitude and a direction of a lateral force on the tire monitor over time; and
determining the first orientation or the second orientation based on magnitude and the direction of the lateral force on the tire monitor over time.

9. A method for auto locating a tire monitor on a vehicle, the tire monitor being associated with a tire on the vehicle, the method comprising:
receiving, from an accelerometer associated with the tire monitor, acceleration data;
receiving, from a sensor associated with the tire monitor, sensor data associated with an area of contact of the tire with a road surface; and
determining, based at least in part on the acceleration data and the sensor data, a location of the tire on the vehicle.

10. The method of claim 9, wherein the determining the location of the tire on the vehicle comprises determining that the tire is associated with the front axle or the rear axle, and determining that the tire is associated with the right side of the vehicle or the left side of the vehicle

11. The method of claim 10, wherein:
the determining that the tire is associated with the front axle or the rear axle comprises:
determining, from the acceleration data, an acceleration event of the vehicle traveling in a forward direction; and
determining, from the sensor data, a change in a dimension of a contact patch during the acceleration event; and/or
the determining that the tire is associated with the right side of the vehicle or the left side of the vehicle comprises:
determining, from the acceleration data, a cornering event; and
determining, from the sensor data, a change in a dimension of a contact patch during the cornering event.

12. The method of claim 11, further comprising:
determining that the acceleration event is an increase in acceleration; and
determining that the tire is associated with the rear axle in response to an increase in the dimension of the contact patch during the acceleration event; or
determining that the tire is associated with the front axle in response to a decrease in the dimension of the contact patch during the acceleration event.

13. The method of claim 11, further comprising:
determining that the acceleration event is a deceleration of the vehicle; and
determining that the tire is associated with the front axle in response to an increase in the dimension of the contact patch during the acceleration event; or
determining that the tire is associated with the rear axle in response to a decrease in the dimension of the contact patch during the acceleration event.

14. The method of claim 9, further comprising:
determining, based at least in part on the acceleration data, an orientation of the tire monitor relative to the vehicle, the orientation comprising one of a first orientation or a second orientation rotated 180-degrees relative to the first orientation.

15. A system comprising:
a vehicle;
tires associated with the vehicle;
the tire monitor of any one of claim 1 through claim 8 associated with one of the tires
